(19) Europäisches Patentamt
European Patent Office
Office européen des brevets

(11) EP 2 129 737 B1

(12) **EUROPEAN PATENT SPECIFICATION**

(45) Date of publication and mention of the grant of the patent:
**17.10.2012 Bulletin 2012/42**

(21) Application number: **08742585.6**

(22) Date of filing: **03.04.2008**

(51) Int Cl.:
***C09K 5/04*** *(2006.01)* ***F25B 15/02*** *(2006.01)*

(86) International application number:
**PCT/US2008/004436**

(87) International publication number:
**WO 2008/124087 (16.10.2008 Gazette 2008/42)**

(54) **HEAT TRANSFER SYSTEMS USING MIXTURES OF POLYOLS AND IONIC LIQUIDS**

WÄRMEÜBERTRAGUNGSSYSTEME MIT MISCHUNG AUS POLYOLEN UND IONISCHEN FLÜSSIGKEITEN

SYSTÈMES DE TRANSFERT DE CHALEUR UTILISANT DES MÉLANGES DE POLYOLS ET DE LIQUIDES IONIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.04.2007 US 921585 P**

(43) Date of publication of application:
**09.12.2009 Bulletin 2009/50**

(73) Proprietor: **E. I. Du Pont de Nemours and Company**
**Wilmington, DE 19898 (US)**

(72) Inventors:
- **YOKOZEKI, Akimichi**
  **Wilmington, Delaware 19807 (US)**
- **SHIFLETT, Mark, Brandon**
  **Wilmington, Delaware 19806 (US)**

(74) Representative: **Matthews, Derek Peter**
**Dehns**
**St Bride's House**
**10 Salisbury Square**
**London**
**EC4Y 8JD (GB)**

(56) References cited:
**EP-A- 1 676 894** **WO-A-2005/113702**
**WO-A-2006/124776**

- **M. WAGNER, O. STANGA, W. SCHRÖER: "corresponding states analysis of the critical points in binary solutions of room temperature ionic liquids" PHYS.CHEM.CHEM.PHYS., vol. 5, 2003, pages 3943-3950, XP008094819**
- **DATABASE WPI Week 200736 Thomson Scientific, London, GB; AN 2007-382214 XP002490275 & JP 2007 070421 A (JAPAN CARLIT CO LTD) 22 March 2007 (2007-03-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

This invention relates to thermal energy transfer systems wherein a mixture containing an ionic liquid is used as a thermal energy transfer composition.

### Background

As a new type of solvent with immeasurable vapor pressure, roomtemperature ionic liquids are being studied for diverse applications, such as chemical separations and as unique reaction media. Several processes utilizing ionic liquids have been commercialized, such as the BASIL™ acid scavenging technology from BASF (Ludwigshafen, Germany).

Thermal properties such as heat capacity, thermal conductivity, density, thermal stability, vapor pressure, and melting points have been measured for several ionic liquids (see, for example, Van Valkenburg et al, "Thermochemistry of Ionic Liquid Heat-Transfer Fluids", Thermochimica Acta, 2005, 181-188). One disadvantage of ionic liquids, however, is that the viscosity of most of them is relatively high, which reduces the opportunity to use them as thermal energy transfer fluids.

A need thus remains for systems and methods by which ionic liquids may be used for thermal energy transfer purposes. WO 2005/113702 and WO 2006/124776 disclose combinations of ionic liquids with working fluids; however, we have found that mixtures of polyols, such as 1,3-propanediol, with ionic liquids are suitable for use as thermal energy transfer compositions.

### Summary

This invention relates to a thermal energy transfer composition that includes an ionic liquid and a polyol, and to methods and apparatus for thermal energy transfer that employ such composition.

In one embodiment, the thermal energy transfer composition may be a mixture including 1,3-propanediol as the polyol and at least one ionic liquid. In another embodiment, the thermal energy transfer composition may be a mixture that may include 1,3-propanediol as the polyol and at least one ionic liquid, wherein the ionic liquid comprises a cation selected from the group consisting of pyridinium, pyridazinium, pyrimidinium, pyrazinium, imidazolium, pyrazolium, thiazolium, oxazolium and triazolium as described herein. The thermal energy transfer composition can act as a primary coolant or secondary coolant. In addition to a polyol, the thermal energy transfer composition may include additional coolants, or additives such as corrosion inhibitors and lubricants.

A further embodiment of this invention includes an apparatus for thermal energy transfer that includes a thermal energy transfer composition that includes in admixture a polyol and at least one ionic liquid.

In another embodiment, this invention provides a thermal energy transfer apparatus that includes a first chamber into and out of which flows a fluid, and a second chamber into and out of which flows a thermal energy transfer composition, wherein each chamber has one or more walls, the fluid and the thermal energy transfer composition are separated by a wall of one of the chambers or a wall that is common to both chambers, the respective temperatures of the fluid and the thermal energy transfer composition are not equal, and the thermal energy transfer composition comprises a polyol and an ionic liquid.

In a further embodiment, this invention provides a method of transferring thermal energy by contacting a solid object, a fluid, or a chamber that contains the fluid with a thermal energy transfer composition, wherein the solid object or fluid has a first temperature, the thermal energy transfer composition has a second temperature, the first and second temperatures are not equal, and the thermal energy transfer composition comprises a polyol and an ionic liquid.

In the embodiments described above, a suitable polyol for use therein is 1,3-propane diol.

Yet another embodiment of this invention provides an apparatus for temperature adjustment that includes (a) an absorber that forms a mixture of a refrigerant and an absorbent; (b) a generator that receives the mixture from the absorber and heats the mixture to separate refrigerant, in vapor form, from the absorbent, and increases the pressure of the refrigerant vapor; (c) a condenser that receives the vapor from the generator and condenses the vapor under pressure to a liquid; (d) a pressure reduction device through which the liquid refrigerant leaving the condenser passes to reduce the pressure of the liquid to form a mixture of liquid and vapor refrigerant; (e) an evaporator that receives the mixture of liquid and vapor refrigerant that passes through the pressure reduction device to evaporate the remaining liquid to form refrigerant vapor; and (f) a conduit that passes the refrigerant vapor leaving the evaporator back to the absorber.

Such an apparatus may be used for heating by locating the condenser in proximity to an object, medium or space to be heated, or the apparatus may be used for cooling by locating the evaporator in proximity to an object, medium

or space to be cooled.

In a further embodiment, this invention provides a process for adjusting the temperature of an object, medium or a space by (a) absorbing refrigerant vapor with an absorbent to form a mixture; (b) heating the mixture to separate refrigerant, in vapor form, from the absorbent and increase the pressure of the refrigerant vapor; (c) condensing the refrigerant vapor under pressure to a liquid; (d) reducing the pressure of the liquid refrigerant, and evaporating the refrigerant to form refrigerant vapor; and (e) repeating step (a) to re-absorb, with the absorbent, the refrigerant vapor.

In the embodiment of the above described process, the temperature adjustment performed by the process may be an increase in temperature, and for that purpose refrigerant vapor is condensed to a liquid in proximity to an object, medium or space to be heated; or the temperature adjustment performed by the process may be a decrease in temperature, and for that purpose liquid refrigerant is evaporated in proximity to an object, medium or space to be cooled.

In the embodiments such as described above, a polyol, such as 1,3-propane diol, may be used as the refrigerant, and an ionic liquid may be used as the absorbent.

## Brief Description of the Drawings

Figure 1 contains a schematic diagram of (a) the components of an apparatus or device for the performance of a simple absorption refrigeration cycle, and (b) the process steps in such cycle.

Figure 2 contains a schematic diagram of the testing apparatus used in the examples to determine vapor/liquid equilibrium ("VLE") or vapor/liquid/liquid equilibrium ("VLLE"), in which: $i$ =1, lower liquid phase; $i$ = 2, upper liquid phase, $i$ = 3, vapor phase; $h_1$, height of lower liquid phase; $h_2$ height of upper liquid phase; (A) is Swagelok® valve, (B) is Swagelok® compression fitting; (C) is Teflon® fluoropolymer o-ring; and (D) outer tube is polycarbonate shield, inner tube is borosilicate glass.

Figure 3 contains a schematic diagram of a sample holder and mixing apparatus used in the examples to determine VLE or VLLE for a group of samples; the apparatus is in upright position in constant temperature bath, and (A) is motor drive for rocking motion; (B) is constant temperature bath; (C) is rocking sample tube holder; (D) is sample tubes; (E) is viewing window.

Figure 4 shows temperature-composition phase diagrams for 1,3-propanediol + [bmim][$PF_6$]; 1,3-propanediol + [bmim][$BF_4$]; and 1,3-propanediol + [emim][$BF_4$]. Lines: trend lines. Diamonds: VLLE measurements for 1,3-propanediol + [bmim][$PF_6$]; Squares: VLLE measurements for 1,3-propanediol + [emim][$BF_4$]; Triangles: VLLE measurements for [bmim][$BF_4$].

## Detailed Description

This invention relates to a thermal energy transfer composition that includes an ionic liquid and a polyol, and to methods and apparatus for thermal energy transfer that employ such composition.

In the description of this invention, the following definitional structure is provided for certain terminology as employed in various locations in the specification:

"Alkane" refers to a saturated hydrocarbon having the general formula $C_nH_{2n+2}$, which may be a straight-chain, branched or cyclic. A cyclic compound requires a minimum of three carbons.

"Alkene" refers to an unsaturated hydrocarbon that contains one or more C=C double bonds and that may be a straight-chain, branched or cyclic. An alkene requires a minimum of two carbons. A cyclic compound requires a minimum of three carbons.

"Aromatic" refers to benzene and compounds that resemble benzene in chemical behavior.

"Fluorinated ionic liquid" is defined as an ionic liquid having at least one fluorine on either the cation or the anion. A "fluorinated cation" or "fluorinated anion" is a cation or anion, respectively, comprising at least one fluorine.

"Heteroaryl" refers to an alkyl group having a heteroatom.

A "heteroatom" is an atom other than carbon in the structure of an alkanyl, alkenyl, cyclic or aromatic compound.

An "ionic liquid" is defined as an organic salt that is fluid at or below about 100 °C.

A "refrigerant" is a fluidic substance such as a polyol (e.g. 1,3-propanediol) that may be used as a thermal energy transfer vehicle. A refrigerant, when it changes phase from liquid to vapor (evaporates), removes heat from the surroundings; and when it changes phase from vapor to liquid (condenses), adds heat to the surroundings. Although the term refrigerant may carry the connotation of a substance used only for cooling, the term is used herein in the generic sense of a thermal energy transfer vehicle or substance that is applicable for use in a system or apparatus that may be used for heating or cooling.

"Refrigerant pair", "refrigerant/absorbent pair" and "refrigerant/ionic liquid pair" are used interchangeably, and refer to a mixture suitable for use in the operation of an absorption cycle, which requires the presence of both a refrigerant and an absorbent, where the absorbent absorbs the refrigerant. As noted elsewhere, the absorbent herein may be an ionic liquid. A "refrigerant pair composition" is a composition comprising a refrigerant pair, a refrigerant/absorbent pair, or a refrigerant/ionic liquid pair.

"Vacuum" refers to pressures less than about 1 bar but greater than about $10^{-4}$ bar for practical use in absorption cycles.

This invention provides a system for thermal energy transfer that utilizes as a thermal energy transfer composition a composition that includes a polyol and at least one ionic liquid. A thermal energy transfer system provides a device, apparatus and/or equipment that facilitates the transfer of thermal energy between one object, medium and/or space that has a first temperature and another that has a second, different temperature. A thermal energy transfer system may thus be used either for heating or for cooling.

Thermal energy may be transferred in a thermal energy transfer system, for example, by conductive and/or convective processes. In an industrial application using a heat exchanger, for example, two fluids at different temperatures are placed in contact with a conductive barrier (such as a tube wall) between them, and thermal energy is transferred from the fluid with the higher temperature through the conductive barrier to the fluid with the lower temperature until they reach the same temperature level.

The driving force for thermal energy transfer is the difference in temperature between one object, medium or space and another, and the greater the difference in temperature the higher the rate at which the thermal energy will flow between them. Another factor of importance is the size of area over which one object, medium or space is enabled to contact another, or a common barrier between them, and the greater the size of the area the larger the amount of thermal energy that will flow in a given time with a given temperature difference. Yet another factor affecting thermal energy flow is the rate at which thermal energy will flow into or out from each object, medium or space. A high resistance to thermal energy flow in either object, medium or space will produce a slow overall rate of transfer. Yet another factor that will affect thermal energy flow is the rate at which thermal energy tends to flow through whatever conductive barrier (such as a metal tube or plate) as may exist between one object, medium and space and another, as influenced by the selection of material from which that conductive barrier is made.

Representative forms that a thermal energy transfer system in this invention may take include a tube-and-shell heat exchanger and a plate heat exchanger. In a tube-and-shell heat exchanger, as the name implies, one or more tubes is installed within a cylindrical canister, and a fluid at one temperature flows into and out from the tube and another fluid at a second temperature flows into and out of the canister and in doing so surrounds the tube(s). One chamber may thus be installed within another. Thermal energy flows across the conductive barrier represented by the tube casing from the higher temperature fluid to the lower, and the thermal energy composition will adjust the temperature of the other fluid (the "other fluid"). Either the fluid in the canister or the fluid in the tube may be a thermal energy transfer composition according to this invention.

Where a thermal energy transfer composition flows into and out from a tube such as in a tube-and-shell heat exchanger, resistance to thermal energy flow through the wall of the tube may be reduced by generating turbulence in the tube such as by incorporating therein saddles, twisted wires, tube deformations or other static mixers to disrupt the boundary layer of the flowing composition.

In a plate heat exchanger, plates are arranged in such a way that there are formed channels of hot and cold liquid alternately, wherein the channels are adjacent to each other. Due to corrugations in the plate, high turbulent flow increases the thermal energy transfer rate. The plate produces an extremely large surface area, which allows for the fastest possible thermal energy transfer. Making each chamber thin ensures that the majority of the volume of the liquid contacts the plate, again aiding thermal energy exchange. A thermal energy transfer composition according to this invention may be used in either channel.

Both types of heat exchangers as described above thus have chambers into and out from which a fluid flows - the tube, the shell and the channels, respectively; and each chamber has one or more walls that form the enclosure

thereof. Whether flowing in the tube, the canister or one of the channels, the target fluid and the thermal energy transfer composition are separated by a wall of one of the chambers, *e.g.* the wall of a tube, or a wall that is common to both chambers, *e.g.* the wall between adjacent channels. The direction of flow of the target fluid may be parallel to, opposite to or across the direction of flow of the thermal energy transfer composition.

Other aspects of thermal energy transfer systems and thermal energy transfer theory useful herein are described in "Heat Transfer" in Kirk-Othmer Encyclopedia of Chemical Technology, 5th Edition [Volume 13, pages 242-281 (2005) John Wiley & Sons, Inc., Hoboken, NJ] and Shah, R.K. and Mueller, A.C.; and "Heat Exchange" in Ullmann's Encyclopedia of Industrial Chemistry, Sixth Edition (pages 167-280, Wiley-VCH Verlag GmbH & CoA, Weinheim, Germany).

This invention also provides a method for thermal energy transfer or for temperature adjustment, either cooling or heating, using a mixture that includes a polyol and at least one ionic liquid as a thermal energy transfer composition. A thermal energy transfer composition is used to transfer thermal energy between one object, medium and/or space that has a first temperature and another that has a second, different temperature. Such a method involves contacting a solid object, a target fluid, or a chamber that contains the target fluid with a thermal energy transfer composition, wherein the solid object or target fluid has a first temperature, the thermal energy transfer composition has a second temperature, the first and second temperatures are not equal, and the thermal energy transfer composition comprises a polyol and an ionic liquid. Where the thermal energy transfer composition is, for example, located in the tube of a tube-and-shell heat exchanger, the annulus of the canister formed by the exterior wall of the canister and the wall of the tube within the canister may be regarded as a chamber that contains the target fluid, and the thermal energy transfer composition contacts that chamber as it passes through the tube. Conversely, the target fluid may be in the tube and the thermal energy transfer composition may be in the shell.

In the embodiments described above, either the fluid or the thermal energy transfer composition hereof may have the higher or lower temperature. The fluid may be a liquid or a gas, and when it is a gas, it may be contacted with the thermal energy transfer composition hereof by being bubbled through it. 1,3-Propane diol is a preferred polyol for use in the thermal energy transfer composition.

An ionic liquid suitable for use herein is an ionic liquid with which, at least to some extent, a polyol is miscible, or in which, at least to some extent, a polyol is soluble. The energy efficiency of thermal energy transfer will increase in direct proportion to the extent to which the polyol is miscible with or soluble in at least one ionic liquid.

The choice of ionic liquid will affect the freezing point of the thermal energy transfer composition. 1-Butyl-3-methylimidazolium hexafluorophosphate has a freezing point at 10°C, whereas 1-ethyl-3-methyl bis(trifluoromethylsulfonyl)imide has a freezing point at -20°C. Alternatively, an ionic liquid having a freezing point less than -20°C could be selected. In any event, the choice of ionic liquid can lead to freezing point depression of the thermal energy transfer composition. The freezing point for 1,3-propanediol, for example, is -27°C. When 1,3-propane diol is used as the poyol, if an ionic liquid is chosen that has a freezing point below -27°C, the freezing point of the composition will likely be lowered relative to that of the 1,3-propanediol alone. Other ionic liquids or combinations thereof, when mixed with 1,3-propanediol, will also result in a lowering of the freezing point beyond that of either the ionic liquid or 1,3-propanediol alone. Acetates, formates and succinates, for example, are known to reduce the freezing point of thermal energy transfer fluids, and ionic liquids having acetates, formates or succinates as or in the anion will thus also be suitable candidates to reduce the freezing point of thermal energy transfer fluids including mixtures comprising polyols such as 1,3-propanediol. Freezing points of ionic liquids can be found in the literature, or can be readily measured using melting point determinations.

It is preferred in general that a thermal energy transfer composition formed from an ionic liquid and a polyol, such as 1,3-propane diol, have a single liquid phase, and not be present as two or more liquid phases. In a more specific embodiment, it is preferred that the composition be at a temperature that is, for that composition, outside of the liquid-liquid equilibrium boundary line between the 1-phase and the 2-phase systems. The liquid-liquid equilibrium boundary is the temperature at which, for a composition having a particular relative content of ionic liquid and polyol, the composition changes from 1 liquid phase to 2 liquid phases as temperature is decreasing, or from 2 liquid phases to 1 liquid phase as temperature is increasing. This boundary may be represented as a line on a chart that plots temperature on the Y axis and compositional content on the X axis. An example of three such boundary lines may be seen in Figure 4. For a composition having a selected content of its components, when the composition is at a temperature outside the boundary, or above the boundary line on the chart, the composition will have only a single liquid phase, and at a temperature inside the boundary, or below the boundary line on the chart, the composition will have two liquid phases. In the 2-phase region, the lower phase will be the ionic liquid-rich phase and the upper phase will be the 1,3-propanediol-rich phase. In a more specific embodiment, a thermal energy transfer composition, for a selected compositional content, may be at a temperature that is higher than the upper critical solution temperature (UCST), which is the temperature at the apex of the boundary line as shown on the chart. In Figure 4, for example, the UCST for the bmimPF6 composition is at about 84°C. The UCST is the temperature above which a mixture is miscible.

A further embodiment of the use of a composition as provided by this invention for thermal energy transfer purposes involves the use of a mixture of a polyol and an ionic liquid as a refrigerant pair in an absorption cooling or

heating cycle. There is thus further provided herein an absorption cooling or heating system that utilizes a refrigerant pair comprising a polyol as a refrigerant and at least one ionic liquid as an absorbent. This invention also provides a process for temperature adjustment, either cooling or heating, utilizing a mixture of a polyol as the refrigerant and at least one ionic liquid as the absorbent in an absorption cooling or heating system.

A schematic diagram for a simple absorption cycle, and the apparatus by which it is run, is shown in Figure 1. The system is composed of condenser and evaporator units with an expansion valve similar to an ordinary vapor compression cycle, but an absorber-generator solution circuit replaces the compressor. The circuit may be composed of an absorber, a generator, a heat exchanger, a pressure control device and a pump for circulating the solution. In some embodiments, the thermal energy released by the absorber upon the absorption of the refrigerant by the absorbent may be used to heat a mixture of refrigerant and absorbent in the generator to separate the refrigerant in vapor form from the absorbent.

As shown in Figure 1, a typical apparatus for operating an absorption cycle may include components such as an absorber-generator solution circuit as shown on the left side of the drawing, which by the outflow and inflow of thermal energy increases the pressure of refrigerant vapor as a compressor does mechanically, where the circuit may be composed of an absorber, a generator, a heat exchanger, a pressure control device and a pump for circulating the solution. The apparatus also is composed of condenser and evaporator units with an expansion valve, as shown on the right side of the drawing.

In the apparatus as shown in Figure 1, mixture of a refrigerant and an absorbent is formed in the absorber; the mixture is passed to a generator where the mixture is heated to separate refrigerant, in vapor form, from the absorbent, and the pressure of the refrigerant vapor is increased; the refrigerant vapor is passed to a condenser where the vapor is condensed under pressure to a liquid; the liquid refrigerant is passed to an expansion device where the pressure of the liquid refrigerant is reduced to form a mixture of liquid and vapor refrigerant; the mixture of liquid and vapor refrigerant is passed to an evaporator where the remaining liquid is evaporated to form refrigerant vapor; the refrigerant vapor leaving the evaporator is passed to the absorber to repeat step (a) and re-form a mixture of the refrigerant vapor and the absorbent.

An apparatus as shown in Figure 1, and the apparatus as disclosed herein is capable of executing an absorption cycle using a polyol as the refrigerant and any one or more ionic liquids as described herein as the absorbent. The apparatus hereof is also capable of executing any one or more of the processes as described herein. Yet another embodiment of this invention is an apparatus substantially as shown or described in Figure 1.

The absorber side of the absorption cycle will consist primarily of the ionic liquid. In one embodiment, the concentration of ionic liquid on the absorber side is greater than about 50% by weight of that of the ionic liquid plus the polyol. In an alternative embodiment, the concentration of ionic liquid on the absorber side is greater than about 70% by weight of that of the ionic liquid plus the polyol. The generator side of the absorption cycle will consist primarily of the polyol, with the concentration of the polyol being as high as 99 weight percent or greater relative to the weight of the ionic liquid plus the polyol.

This invention also provides an apparatus for heating an object, medium or space that includes (a) an absorber that forms a mixture of a refrigerant and an absorbent; (b) a generator that receives the mixture from the absorber and heats the mixture to separate refrigerant, in vapor form, from the absorbent, and increases the pressure of the refrigerant vapor; (c) a condenser, located in proximity to the object, medium or space to be heated, that receives the vapor from the generator and condenses the vapor under pressure to a liquid; (d) a pressure reduction device through which the liquid refrigerant leaving the condenser passes to reduce the pressure of the liquid to form a mixture of liquid and vapor refrigerant; (e) an evaporator that receives the mixture of liquid and vapor refrigerant that passes through the pressure reduction device to evaporate the remaining liquid to form refrigerant vapor; and (f) a conduit that passes the refrigerant vapor leaving the evaporator to the absorber.

This invention also provides an apparatus for cooling an object, medium or space that includes (a) an absorber that forms a mixture of a refrigerant and an absorbent; (b) a generator that receives the mixture from the absorber and heats the mixture to separate refrigerant, in vapor form, from the absorbent, and increases the pressure of the refrigerant vapor; (c) a condenser that receives the vapor from the generator and condenses the vapor under pressure to a liquid; (d) a pressure reduction device through which the liquid refrigerant leaving the condenser passes to reduce the pressure of the liquid to form a mixture of liquid and vapor refrigerant; (e) an evaporator, located in proximity to the object, medium or space to be cooled, that receives the mixture of liquid and vapor refrigerant that passes through the pressure reduction device to evaporate the remaining liquid to form refrigerant vapor; and (f) a conduit that passes the refrigerant vapor leaving the evaporator to the absorber.

This invention also provides a process for heating an object, medium or a space comprising (a) absorbing refrigerant vapor with an absorbent to form a mixture; (b) heating the mixture to separate refrigerant, in vapor form, from the absorbent and increase the pressure of the refrigerant vapor; (c) condensing the refrigerant vapor under pressure to a liquid in proximity to the object, medium or space to be heated; (d) reducing the pressure of the liquid refrigerant, and evaporating the refrigerant to form refrigerant vapor; and (e) repeating step (a) to re-absorb, with the absorbent, the

refrigerant vapor.

This invention also provides a process for cooling an object, medium or a space comprising (a) absorbing refrigerant vapor with an absorbent to form a mixture; (b) heating the mixture to separate refrigerant, in vapor form, from the absorbent and increase the pressure of the refrigerant vapor; (c) condensing the refrigerant vapor under pressure to a liquid; (d) reducing the pressure of the liquid refrigerant, and evaporating the refrigerant, in proximity to the object, medium or space to be cooled, to form refrigerant vapor; and (e) repeating step (a) to re-absorb, with the absorbent, the refrigerant vapor.

This invention also provides a process for heating an object, medium or a space in an apparatus that executes an absorption cycle by (a) forming in an absorber a mixture of a refrigerant and an absorbent; (b) passing the mixture to a generator where the mixture is heated to separate refrigerant, in vapor form, from the absorbent, and the pressure of the refrigerant vapor is increased; (c) passing the refrigerant vapor to a condenser in proximity to the object, medium or space to be heated where the vapor is condensed under pressure to a liquid; (d) passing the liquid refrigerant to an expansion device where the pressure of the liquid refrigerant is reduced to form a mixture of liquid and vapor refrigerant; (e) passing the mixture of liquid and vapor refrigerant to an evaporator where the remaining liquid is evaporated to form refrigerant vapor; and (f) passing the refrigerant vapor leaving the evaporator to the absorber to repeat step (a) and re-form a mixture of the refrigerant vapor and the absorbent.

This invention also provides a process for cooling an object, medium or a space in an apparatus that executes an absorption cycle by (a) forming in an absorber a mixture of a refrigerant and an absorbent; (b) passing the mixture to a generator where the mixture is heated to separate refrigerant, in vapor form, from the absorbent, and the pressure of the refrigerant vapor is increased; (c) passing the refrigerant vapor to a condenser where the vapor is condensed under pressure to a liquid; (d) passing the liquid refrigerant to an expansion device where the pressure of the liquid refrigerant is reduced to form a mixture of liquid and vapor refrigerant; (e) passing the mixture of liquid and vapor refrigerant to an evaporator in proximity to the object, medium or space to be cooled where the remaining liquid is evaporated to form refrigerant vapor; and (f) passing the refrigerant vapor leaving the evaporator to the absorber to repeat step (a) and re-form a mixture of the refrigerant vapor and the absorbent.

In any process as described above, the absorbent separated from refrigerant in step (b) may be recirculated for use in a later step.

Mixtures of ionic liquids may also be used herein as the absorbent, and such mixtures may be desirable, for example, for achieving proper absorption behavior. 1,3-propane diol is a preferred polyol for use as the refrigerant in an absorption cycle.

An absorption cycle, and systems in which they are run, are also described in Application Guide for Absorption Cooling/Refrigeration Using Recovered Heat [Dorgan et al (American Society of Heating, Refrigeration and Air Conditioning Engineers, Inc., 1995, Atlanta GA, Chapter 5)], and Haaf et al in "Refrigeration Technology" (Ullmann's Encyclopedia of Industrial Chemistry, Sixth Edition, Wiley-VCH Verlag GmbH, Weinheim, Germany, Volume 31, pages 269-312).

When 1,3-propanediol, for example, is used as the polyol herein, it would in general be expected to be more miscible with or soluble in ionic liquids that are hydrophilic to some extent, and ionic liquids having cations having at least one alcohol side chain, or those comprising anions having at least one acetate or sulfate group, would thus be desirable choices for use in various embodiments of this invention. 1,3-Propanediol would in such case also preferably be miscible with or soluble in an ionic liquid as used herein over the temperature range of the operation of the absorption system, particularly from that of the evaporator to that of the generator. Evaporator temperatures can be as low as about 5°C. Single effect generator temperatures can be as high as about 150°C, while double effect generator temperatures can be as high as about 200°C. As a consequence, over a temperature range of from about 5°C to about 200°C, a variety of different levels of the relative content of the refrigerant and absorbent in an absorption cycle are suitable, and the concentration of either 1,3-propanediol or an ionic liquid in a composition formed therefrom may be in the range of from about 1% to about 99% by weight of the combined weight of the ionic liquid and 1,3-propanediol therein.

A thermal energy transfer system as provided by this invention, such as a heat exchanger, may function, for example, as a condenser, heater, cooler or chiller. In such systems, a mixture of a polyol and an ionic liquid can be used as primary thermal energy transfer compositions (or primary coolants or refrigerants), wherein, for example, a body at one temperature is in contact with a second body at a higher temperature that is being cooled. Mixtures of a polyol and an ionic liquid can also be used as secondary thermal energy transfer compositions (or secondary coolants or refrigerants). Chilling is used to cool secondary thermal energy transfer compositions in order to remove thermal energy from other bodies. The use of secondary thermal energy transfer compositions is suitable when chilled fluid is to be distributed to several consumer locations or when contact between primary coolant and product resulting from leaks must be avoided. Examples of such systems include industrial air conditioning systems, food-cooling systems in grocery stores, and ice-skating rinks.

As noted above, a thermal energy transfer system as provided by this invention may also operate to provide heating or cooling by employing an absorption refrigeration cycle (such as described in US 2006/197,053), or by employing

a hybrid vapor compression-absorption refrigeration cycle (such as described in US 2007/019,708).

Any of the thermal energy transfer systems as described above may be deployed for use in, or fabricated or operated as, a refrigerator, a freezer, an ice machine, an air conditioner, an industrial cooling system, refrigeration system for cold room used for the preservation of foodstuffs of plant or animal origin, heater or heat pump. Each of these instruments may be situated in a residential, commercial or industrial setting, or may be incorporated into a mobilized device such as a car, truck, bus, train, airplane, or other device for transportation, or may be incorporated into a piece of equipment such as a medical instrument.

In this invention, a thermal energy transfer composition is formed from one or more polyols and one or more ionic liquids. Ionic liquids are organic compounds that are liquid at room temperature (approximately 25°C). They differ from most salts in that they have very low melting points, and they tend to be liquid over a wide temperature range. Many of them are not soluble in non-polar hydrocarbons; are immiscible with water, depending on the anion; and many of them are highly ionizing (but have a low dielectric strength). Ionic liquids have essentially no vapor pressure, most are air and water stable, and they can either be neutral, acidic or basic.

A cation or anion of an ionic liquid useful herein can in principle be any cation or anion such that the cation and anion together form an organic salt that is liquid at or below about 100°C. The properties of an ionic liquid can, however, be tailored by varying the identity of the cation and/or anion. For example, the acidity of an ionic liquid can be adjusted by varying the molar equivalents and type and combinations of Lewis acids used.

Many ionic liquids are formed by reacting a nitrogen-containing heterocyclic ring, preferably a heteroaromatic ring, with an alkylating agent (for example, an alkyl halide) to form a quaternary ammonium salt, and performing ion exchange or other suitable reactions with various Lewis acids or their conjugate bases to form the ionic liquid. Examples of suitable heteroaromatic rings include substituted pyridines, imidazole, substituted imidazole, pyrrole and substituted pyrroles. These rings can be alkylated with virtually any straight, branched or cyclic $C_{1-20}$ alkyl group, but preferably, the alkyl groups are $C_{1-16}$ groups, since groups larger than this may produce low melting solids rather than ionic liquids. Various triarylphosphines, thioethers and cyclic and non-cyclic quaternary ammonium salts may also been used for this purpose. Counterions that may be used include chloroaluminate, bromoaluminate, gallium chloride, tetrafluoroborate, tetrachloroborate, hexafluorophosphate, nitrate, trifluoromethane sulfonate, methylsulfonate, p-toluenesulfonate, hexafluoroantimonate, hexafluoroarsenate, tetrachloroaluminate, tetrabromoaluminate, perchlorate, hydroxide anion, copper dichloride anion, iron trichloride anion, zinc trichloride anion, as well as various lanthanum, potassium, lithium, nickel, cobalt, manganese, and other metal-containing anions.

Ionic liquids may also be synthesized by salt metathesis, by an acid-base neutralization reaction or by quaternizing a selected nitrogen-containing compound; or they may be obtained commercially from several companies such as Merck (Darmstadt, Germany) or BASF (Mount Olive, NJ).

Representative examples of useful ionic liquids are described in sources such as J. Chem. Tech. Biotechnol., 68:351-356 (1997); Chem. Ind., 68:249-263 (1996); J. Phys. Condensed Matter, 5: (supp 34B):B99-B106 (1993); Chemical and Engineering News, Mar. 30, 1998, 32-37; J. Mater. Chem., 8:2627-2636 (1998); Chem. Rev., 99:2071-2084 (1999); and US 2004/0133058. In one embodiment hereof, a library, *i.e.* a combinatorial library, of ionic liquids may be prepared, for example, by preparing various alkyl derivatives of the quaternary ammonium cation, and varying the associated anions.

In one embodiment of this invention, ionic liquids suitable for use herein include those having cations represented by one or more of the following formulae:

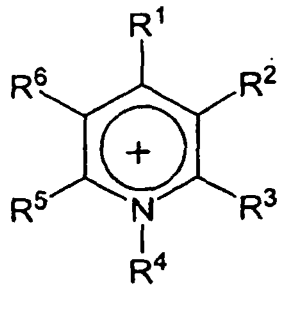

Pyridinium

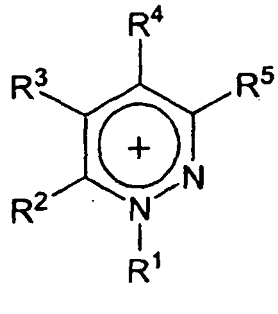

Pyridazinium

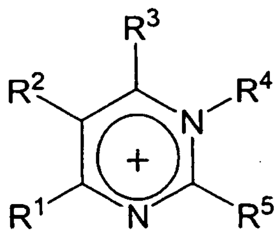

Pyrimidinium

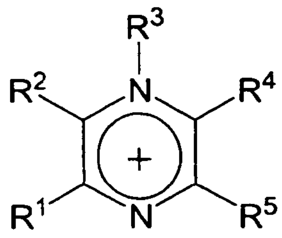

Pyrazinium

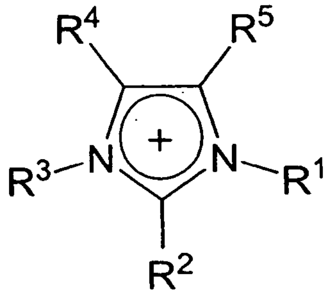

Imidazolium

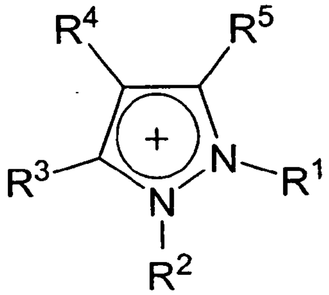

Pyrazolium

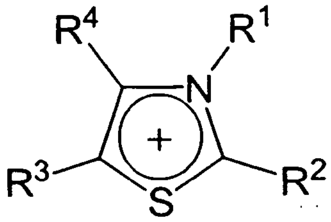

Thiazolium

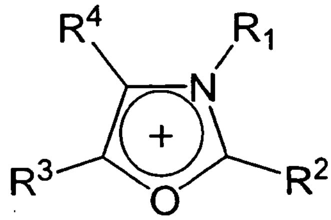

Oxazolium

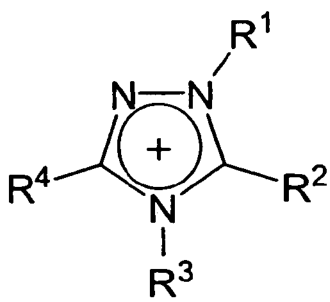

Triazolium

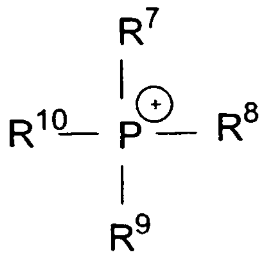

and

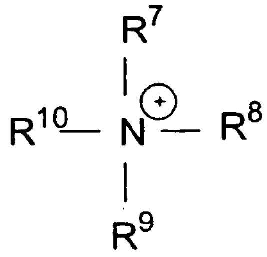

Phosphonium

Ammonium

wherein $R^1$, $R^2$, $R^3$, $R^4$, $R^5$ and $R^6$ are independently selected from the group consisting of:

(i) H;
(ii) halogen;
(iii) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH;
(iv) $-CH_3$, $-C_2H_5$, or $C_3$ to $C_{25}$ straight-chain, branched or cyclic alkane or alkene comprising one to three heteroatoms selected from the group consisting of O, N, Si and S, and optionally substituted with at least one member selected from the group consisting of Cl, Br, F, I, OH, $NH_2$ and SH;
(v) $C_6$ to $C_{20}$ unsubstituted aryl, or $C_3$ to $C_{25}$ unsubstituted heteroaryl having one to three heteroatoms independently selected from the group consisting of O, N, Si and S; and
(vi) $C_6$ to $C_{25}$ substituted aryl, or $C_3$ to $C_{25}$ substituted heteroaryl having one to three heteroatoms independently selected from the group consisting of O, N, Si and S; and wherein the substituted aryl or substituted heteroaryl has one to three substituents independently selected from the group consisting of:

(1) $-CH_3$, $-C_2H_5$, or $C_3$ to $C_{25}$ straight-chain, branched or cyclic alkane or alkene, optionally substituted with at least one member selected from the group consisting of Cl, Br, F I, OH, $NH_2$ and SH,
(2) OH,
(3) $NH_2$, and
(4) SH;

$R^7$, $R^8$, $R^9$ and $R^{10}$ are independently selected from the group consisting of:
(vii) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH;
(viii) $-CH_3$, $-C_2H_5$, or $C_3$ to $C_{25}$ straight-chain, branched or cyclic alkane or alkene comprising one to three heteroatoms selected from the group consisting of O, N, Si and S, and optionally substituted with at least one member selected from the group consisting of Cl, Br, F, I, OH, $NH_2$ and SH;
(ix) $C_6$ to $C_{25}$ unsubstituted aryl, or $C_3$ to $C_{25}$ unsubstituted heteroaryl having one to three heteroatoms independently selected from the group consisting of O, N, Si and S; and
(x) $C_6$ to $C_{25}$ substituted aryl, or $C_3$ to $C_{25}$ substituted heteroaryl having one to three heteroatoms independently selected from the group consisting of O, N, Si and S; and wherein the substituted aryl or substituted heteroaryl has one to three substituents independently selected from the group consisting of:

(1) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH,
(2) OH,
(3) $NH_2$,and
(4) SH; and

wherein, optionally, at least two of $R^1$, $R^2$, $R^3$, $R^4$, $R^5$, $R^6$, $R^7$, $R^8$, $R^9$ and $R^{10}$ together form a cyclic or bicyclic alkanyl or alkenyl group.

In another embodiment, ionic liquids useful for the invention comprise fluorinated cations wherein at least one member selected from $R^1$, $R^2$, $R^3$, $R^4$, $R^5$, $R^6$, $R^7$, $R^8$, $R^9$ and $R^{10}$ comprises $F^-$.

In another embodiment, ionic liquids useful for the invention comprise imidazolium, such as 1-ethyl-3-methylimidazolium and 1-butyl-3-methylimidazolium.

In one embodiment, ionic liquids useful herein have anions selected from the group consisting of $[CH_3CO_2]^-$, $[HSO_4]^-$, $[CH_3OSO_3]^-$, $[C_2H_5OSO_3]^-$, $[AlCl_4]^-$, $[CO_3]^{2-}$, $[HCO_3]^-$, $[NO_2]^-$, $[NO_3]^-$, $[SO_4]^{2-}$, $[PO_4]^{3-}$, $[HPO_4]^{2-}$, $[H_2PO_4]^-$, $[HSO_3]^-$, $[CuCl_2]^-$, $Cl^-$, $Br^-$, $I^-$, $SCN^-$; and any fluorinated anion. Fluorinated anions useful herein include $[BF_4]^-$, $[PF_6]^-$, $[SbF_6]^-$, $[CF_3SO_3]^-$, $[HCF_2CF_2SO_3]^-$, $[CF_3HFCCF_2SO_3]^-$, $[HCClFCF_2SO_3]^-$, $[(CF_3SO_2)_2N]^-$, $[(CF_3CF_2SO_2)_2N]^-$, $[(CF_3SO_2)_3C]^-$, $[CF_3CO_2]^-$, $[CF_3OCFHCF_2SO_3]^-$, $[CF_3CF_2OCFHCF_2SO_3]^-$, $[CF_3CFHOCF_2CF_2SO_3]^-$, $[CF_2HCF_2OCF_2CF_2SO_3]^-$, $[CF_2ICF_2OCF_2CF_2SO_3]^-$, $[CF_3CF_2OCF_2CF_2SO_3]^-$, $[(CF_2HCF_2SO_2)_2N]^-$, $[(CF_3CFHCF_2SO_2)_2N]^-$; and $F^-$.

In a more specific embodiment, ionic liquids suitable for use herein may have a cation selected from the group consisting of pyridinium, pyridazinium, pyrimidinium, pyrazinium, imidazolium, pyrazolium, thiazolium, oxazolium, triazolium, phosphonium, and ammonium as defined above; and an anion selected from the group consisting of $[CH_3CO_2]^-$, $[HSO_4]^-$, $[CH_3OSO_3]^-$, $[C_2H_5OSO_3]^-$, $[AlCl_4]^-$, $[CO_3]^{2-}$, $[HCO_3]^-$, $[NO_2]^-$, $[NO_3]^-$, $[SO_4]^{2-}$, $[PO_4]^{3-}$, $[HPO_4]^{2-}$, $[H_2PO_4]^-$, $[HSO_3]^-$, $[CuCl_2]^-$, $Cl^-$, $Br^-$, $I^-$, $SCN^-$, and any fluorinated anion. In yet another embodiment, ionic liquids suitable for use herein may have a cation selected from the group consisting of pyridinium, pyridazinium, pyrimidinium, pyrazinium, imidazolium, pyrazolium, thiazolium, oxazolium, triazolium, phosphonium, and ammonium as defined above; and an anion selected from the group consisting of $[BF_4]^-$, $[PF_6]^-$, $[SbF_6]^-$, $[CF_3SO_3]^-$, $[HCF_2CF_2SO_3]^-$, $[CF_3HFCCF_2SO_3]^-$, $[HCClFCF_2SO_3]^-$, $[(CF_3SO_2)_2N]^-$, $[(CF_3CF_2SO_2)_2N]^-$, $[(CF_3SO_2)_3C]^-$, $[CF_3CO_2]^-$, $[CF_3OCFHCF_2SO_3]^-$, $[CF_3CF_2OCFHCF_2SO_3]^-$, $[CF_3CFHOCF_2CF_2SO_3]^-$, $[CF_2HCF_2OCF_2CF_2SO_3]^-$, $[CF_2ICF_2OCF_2CF_2SO_3]^-$, $[CF_3CF_2OCF_2CF_2SO_3]^-$, $[(CF_2HCF_2SO_2)_2N]$-, $[(CF_3CFHCF_2SO_2)N]^-$, and $F^-$.

In still another embodiment, ionic liquids suitable for use herein may have a cation selected from the group consisting of pyridinium, pyridazinium, pyrimidinium, pyrazinium, imidazolium, pyrazolium, thiazolium, oxazolium, triazolium, phosphonium, and ammonium as defined above, wherein at least one member selected from $R^1$, $R^2$, $R^3$, $R^4$, $R^5$, $R^6$, $R^7$, $R^8$, $R^9$ and $R^{10}$ comprises $F^-$; and an anion selected from the group consisting of $[CH_3CO_2]^-$, $[HSO_4]^-$, $[CH_3OSO_3]^-$, $[C_2H_5OSO_3]^-$, $[AlCl_4]^-$, $[CO_3]^{2-}$, $[HCO_3]^-$, $[NO_2]^-$, $[NO_3]^-$, $[SO_4]^{2-}$, $[PO_4]^{3-}$, $[HPO_4]^{2-}$, $[H_2PO_4]^-$, $[HSO_3]^-$, $[CuCl_2]^-$, $Cl^-$, $Br^-$, $I^-$, $SCN^-$, and any fluorinated anion. In still another embodiment, ionic liquids suitable for use herein may have a cation selected from the group consisting of pyridinium, pyridazinium, pyrimidinium, pyrazinium, imidazolium, pyrazolium, thiazolium, oxazolium, triazolium, phosphonium, and ammonium as defined above, wherein at least one member selected from $R^1$, $R^2$, $R^3$, $R^4$, $R^5$, $R^6$, $R^7$, $R^8$, $R^9$ and $R^{10}$ comprises $F^-$; and an anion selected from the group consisting of $[BF_4]^-$, $[PF_6]^-$, $[SbF_6]^-$, $[CF_3SO_3]^-$, $[HCF_2CF_2SO_3]^-$, $[CF_3HFCCF_2SO_3]^-$, $[HCClFCF_2SO_3]^-$, $[(CF_3SO_2)_2N]^-$, $[(CF_3CF_2SO_2)_2N]^-$, $[(CF_3SO_2)_3C]^-$, $[CF_3CO_2]^-$, $[CF_3OCFHCF_2SO_3]^-$, $[CF_3CF_2OCFHCF_2SO_3]^-$, $[CF_3CFHOCF_2CF_2SO_3]^-$, $[CF_2HCF_2OCF_2CF_2SO_3]^-$, $[CF_2ICF_2OCF_2CF_2SO_3]^-$, $[CF_3CF_2OCF_2CF_2SO_3]^-$, $[(CF_2HCF_2SO_2)_2N]^-$, $[(CF_3CFHCF_2SO_2)_2N]^-$, and $F^-$.

In one embodiment, the ionic liquid comprises imidazolium as the cation and $[BF_4]^-$ or $[PF_6]^-$ as the anion. In a more specific embodiment, the ionic liquid comprises 1-ethyl-3-methylimidazolium or 1-butyl-3-methylimidazolium as the cation, and $[BF_4]^-$ or $[PF_6]^-$ as the anion.

The thermal energy transfer compositions provided by this invention, being mixtures of one or more polyols and one or more ionic liquids, are well suited for use for thermal energy transfer purposes because of their low viscosity, low density, high specific heat, high thermal conductivity, and high latent heat. In addition to 1,3-propane diol, polyols that may be selected for use herein in admixture with an ionic liquid to form the thermal energy transfer composition include ethylene glycol, 1,2-propane diol, 1,2,3-propane triol, and $C_n$ linear or cyclic alkanes, where n = 4 to 8 (e.g. butane, pentane, hexane, heptane and octane), that are substituted with m hydroxyl groups, where m = 2 to n. Various polyols suitable for use herein may be made by processes known in the art, or are available commercially from suppliers such as Alfa Aesar (Ward Hill, Massachusetts), City Chemical (West Haven, Connecticut), Fisher Scientific (Fairlawn, New Jersey), Sigma-Aldrich (St. Louis, Missouri) or Stanford Materials (Aliso Viejo, California).

1,3-Propanediol suitable for use herein is available commercially. 1,3-Propanediol can be produced via a "hydroformylation route" by contacting ethylene oxide over a catalyst in the presence of phosphine, water, carbon monoxide, hydrogen and an acid. Alternatively, biologically-produced 1,3-propanediol (currently available from DuPont as Bio-PDO™ propane diol) can be provided for this invention by fermentation. Biologically-produced 1,3-propanediol is obtained by fermenting sugars, optionally obtained from renewable resources such as cellulosic biomass, to 1,3-propanediol. Such fermentation processes are know from and described in sources such as U.S. Patents 5,686,276 and 7,135,309 and US 2006/0286653.

In addition to a polyol, the thermal energy transfer compositions useful for the invention can also comprise additional coolants, such as water, or water admixed with lithium bromide as is commonly used in absorption technology. Additives, such as lubricants, corrosion inhibitors, stabilizers, dyes, and other appropriate materials may also be added to the thermal energy transfer mixtures useful for the invention for a variety of purposes provided they do not have an undesirable influence on the extent to which the polyol is soluble in an ionic liquid. The mixtures useful for the invention may be prepared by any convenient method, including mixing or combining the desired amounts of each component in an appropriate container using, for example, known types of stirrers having rotating mixing elements.

In various embodiments of this invention, an ionic liquid formed by selecting any of the individual cations described or disclosed herein, and by selecting any of the individual anions described or disclosed herein with which to

pair the cation, may be used as an absorbent in an absorption heating or cooling cycle, or as a component in a thermal energy transfer composition. Correspondingly, in yet other embodiments, a subgroup of ionic liquids formed by selecting (i) a subgroup of any size of cations, taken from the total group of cations described and disclosed herein in all the various different combinations of the individual members of that total group, and (ii) a subgroup of any size of anions, taken from the total group of anions described and disclosed herein in all the various different combinations of the individual members of that total group, may be used as an absorbent, or as a component in a thermal energy transfer composition. In forming an ionic liquid, or a subgroup of ionic liquids, by making selections as aforesaid, the ionic liquid or subgroup will be used in the absence of the members of the group of cations and/or anions that are omitted from the total group thereof to make the selection, and, if desirable, the selection may thus be made in terms of the members of the total group that are omitted from use rather than the members of the group that are included for use.

In one embodiment of this invention, such as the absorption refrigeration cycle, the operation of a composition of a polyol and an ionic liquid as a thermal energy transfer composition, and in particular the operation of a polyol as a refrigerant and an ionic liquid as an absorbent, may be described in terms of thermodynamic property charts such as temperature-pressure-concentration (*TPX*) and enthalpy-temperature (*HT*) diagrams. These charts correspond to the familiar *PH* (pressure-enthalpy) or TS (temperature-entropy) diagram in analysis of the conventional vapor compression cycle. However; the use of these charts is adapted to the particular case of an absorption cycle since vapor compression uses a compressor, where the compression process is theoretically a single isentropic path, while the absorption cycle employs the so-called generator-absorber solution circuit, and several thermodynamic processes are involved.

The *PH* or TS diagram in the vapor compression cycle is constructed using equations of state (EOS), and the cycle performance and all thermodynamic properties can be calculated. The thermodynamic charts for the absorption cycle are usually made by empirical correlation equations, which are fitted to experimental solubility and heat capacity data for solution properties, while the vapor phase properties are calculated with the refrigerant EOS. The solubility data may in certain instances be correlated using theoretical solution (often called "activity") models (Nezu et al, "Thermodynamic Properties of Working-Fluid Pairs with R-134a for Absorption Refrigeration System", Natural Working Fluids 2002, IIR Gustav Lorentzen Conf. 5th. China, (Sept. 17-20, 2002, 446-453); Fatouh, M. and Murthy, S. S. [Renewable Energy, 1993, 3:31-37]; Bhatt, M. S., et al [Heat Recovery System & CHP, 1992, 12:225-233]; Ness, H. C. V. and Abbott, M. M. [Classical Thermodynamics of Nonelectrolyte Solutions with Applications to Phase Equilibria, 1982, McGraw-Hill, New York]). However, such models may be limited in their use to temperatures well below the refrigerant critical temperature, and modeling solutions at high generator temperatures may become invalid. The combined use of empirical fitting equations or partially correct equations with the gas phase EOS may thus not always be completely consistent, and it is desirable to model the absorption cycle process with thermodynamically sound EOS. By the use of EOS, even above the critical temperature of refrigerants, thermodynamic properties can be correctly calculated.

Although modeling refrigerant mixtures with EOS is familiar, refrigerant and non-volatile compound mixtures are traditionally treated with empirical correlation models by air conditioning and refrigeration engineers: e.g., refrigerant-lubricant oil solubility. Although one of the difficult problems in using EOS for such mixtures is determining how to set up EOS parameters for non-volatile compounds without much information about the critical parameters and vapor pressure data, EOS models have been successfully applied to refrigerant lubricant oil solubility data as more fully described in Yokozeki, A. [ Proc. Intl. Compressor Eng. Conf. at Purdue, 1994, 1:335-340]; Yokozeki, A. [Intl. J. Thermophys., 2001, 22:1057-1071]; and Yokozeki, A. [Applied Energy, 2005, 80:383-399]. Similar EOS models can therefore be used herein to calculate all thermodynamic properties consistently for use as an indicator of the utility of the refrigerants and ionic liquids disclosed herein as new absorption cycle fluid pairs (Tillner-Roth R and Friend DG [J. Phys. Chem. Ref. Data, 1998, 27, 63-96]).

To model a refrigerant/ionic liquid composition, a generic Redlich-Kwong (RK) type of cubic equation of state (EOS) may be employed as follows:

$$P = \frac{RT}{\tilde{V} - b} - \frac{a(T)}{\tilde{V}(\tilde{V} + b)} \quad (1)$$

$$a(T) = 0.427480 \frac{R^2 T_c^2}{P_c} \alpha(T) \quad (2)$$

$$b = 0.08664\frac{RT_c}{P_c} \quad (3)$$

The temperature-dependent part of the a parameter in the EOS for pure compounds is modeled by the following empirical form (Yokozeki, A. [Intl. J. Thermophys., 2001, 22:1057-1071]; Yokozeki, A. [Applied Energy, 2005, 80:383-399]; Shiflett, M. B. and Yokozeki, A. [Ind. Eng. Chem. Res. 2005, 44:4453-4464]):

$$\alpha(T) = \sum_{k=0}^{\leq 3}\beta_k\left(\frac{T_c}{T} - \frac{T}{T_c}\right)^k. \quad (4)$$

The coefficients, $\beta_k$, are determined so as to reproduce the vapor pressure of each pure compound.

For absorbents, however, vapor pressure data are usually not available, or vapor pressures are practically zero at application temperatures, and furthermore, no data for the critical parameters ($T_c$ and $P_c$) exist. The critical parameters of absorbents can, nevertheless, be estimated in various ways (Reid RC, et al., The Properties of Gases & Liquids, 4th edn. [McGraw-Hill, New York 1987]). As discussed by Yokozeki (Int. J. Thermophys., 2001, 22, 1057-1071), estimates of critical parameters for high boiling-point compounds are sufficient for correlating solubility (*PTx*) data. The temperature-dependent part of the a parameter for absorbents is significant however when the *PTx* data of refrigerant-absorbent mixtures are correlated, although the vapor pressure of absorbents is essentially zero at the temperature of interest. Here, $\alpha(T)$ for an absorbent is modeled by only two terms in eq 4, as applied for the case of refrigerant-lubricant oil mixtures (Yokozeki A, 2001, *supra).*

$$k_{ij} = \frac{l_{ij}l_{ji}(x_i + x_j)}{l_{ji}x_i + l_{ij}x_j} \quad \text{where } k_{ii} = 0 \quad (5)$$

$$\alpha(T) = 1 + \beta_1\left(\frac{T_c}{T} - \frac{T}{T_c}\right) \quad (6)$$

The coefficient $\beta_1$ in eq 6 will be treated as an adjustable fitting parameter.

Then, the *a* and *b* parameters for general *N*-component mixtures are modeled in terms of binary interaction parameters (Yokozeki A [Applied Energy, 2005, 80, 383-399]; and Shiflett MB and Yokozeki A, *supra),* which may be regarded as a modified van der Waals-Berthelot mixing formula.

$$a(T) = \sum_{i,j=1}^{N}\sqrt{a_i a_j}\left(1 - f(T)k_{ij}\right)x_i x_j, \quad a_i = 0.427480\frac{R^2T_{ci}^2}{P_{ci}}\alpha_i(T) \quad (7)$$

$$f(T) = 1 + \tau_{ij}/T, \quad \text{where } \tau_{ij} = \tau_{ji}, \text{ and } \tau_{ii} = 0 \quad (8)$$

$$b = \frac{1}{2}\sum_{i,j=1}^{N}\left(b_i + b_j\right)\left(1 - m_{ij}\right)x_i x_j, \quad b_i = 0.08664\frac{RT_{ci}}{P_{ci}}, \text{ where } m_{ij} = m_{ji}, m_{ii} = 0 \quad (9)$$

$T_{ci}$ : critical temperature of i-th species.
$P_{ci}$: critical pressure of *i*-th species.
$x_i$ : mole fraction of *i*-th species.

In the present model, there are four binary interaction parameters: $l_{ij}$, $l_{ji}$, $m_{ij}$, and $\tau_{ij}$ for each binary pair. It should be noted that when $l_{ij} = l_{ji}$ in eq 5 and $\tau_{ij} = 0$ in eq 8, eq 7 becomes the ordinary quadratic-mixing rule for the a parameter. The present EOS model has been successfully applied for mixtures that are highly non-symmetric with respect to polarity and size, such as various refrigerant/oil mixtures (Yokozeki A, 2001, *supra])* and ammonia/butane mixtures (Yokozeki A [Proc. Int. Congress of Refrigeration Washington, D.C. 2003]); and EcoLibrium™ (2004, 3, 20-24).

For phase equilibrium (solubility) calculations, the fugacity coefficient $\phi_i$ for each compound is needed and derived for the present mixing rule:

$$\ln\phi_i = -\ln\frac{PV}{RT}\left(1-\frac{b}{V}\right)+\frac{b_i'}{V-b}-\frac{ab_i'}{bRT(V+b)}+\frac{a}{bRT}\left(\frac{a_i'}{a}-\frac{b_i'}{b}+1\right)\ln\frac{V}{V+b}, \qquad (10)$$

where $b'_i$ and $a'_i$ are given by:

$$b'_i = \sum_{j=1}^{N}(b_i+b_j)(1-m_{ij})x_j - b \qquad (11)$$

$$a'_i = 2\sum_{j=1}^{N}\sqrt{a_i a_j}\,x_j\left\{1-k_{ij}-\frac{x_i x_j(l_{ji}-l_{ij})(1+\tau_{ij}/T)}{(l_{ji}x_i+l_{ij}x_j)^2}\right\}-a. \qquad (12)$$

A thermodynamically derived function relevant to the present study is an enthalpy (*H*), which is given, in a general form, by:

$$H = \int\sum_{i=1}^{N}C_{pi}^{0}x_i\,dT+\left(\frac{a}{b}-\frac{T}{b}\frac{da}{dT}\right)\ln\frac{V}{V+b}+RT\left(\frac{PV}{RT}-1\right)-\frac{RT^2}{V-b}\frac{db}{dT}$$
$$+\frac{a}{b}\frac{db}{dT}\left[\frac{1}{V+b}-\frac{1}{b}\ln\left(1+\frac{b}{V}\right)\right]+\mathrm{C}, \qquad (13)$$

where C is an arbitrary constant, which can be any value of choice but must be the same constant for any component mixtures within the system in question. The ideal-gas heat capacity for each compound $C_{pi}^{0}$ in eq 13 is modeled with a polynomial form:

$$C_p^0 = C_0 + C_1T + C_2T^2 + C_3T^3. \qquad (14)$$

Theoretical cycle performances for the absorption heating or cooling cycle as shown in Figure 1 are modeled as follows. The overall energy balance gives:

$$Q_g + Q_e + W_p = Q_c + Q_a \qquad (15)$$

From the material balance in the absorber or generator:

$$m_s x_a = (m_s - m_r)x_g; \qquad (16)$$

this provides a mass-flow-rate ratio, f, as defined by:

$$f \equiv \frac{m_s}{m_r} = \frac{x_g}{x_g - x_a}, \quad (17)$$

where $x$ is a mass fraction of an absorbent in solution, the subscripts $a$ and $g$ stand for the absorber and generator solutions, and $m_r$ and $m_s$ are mass flow rates of gaseous refrigerant and absorber-exit solution (or solution pumping rate), respectively.

When a heat transfer efficiency of unity in the heat exchanger unit is assumed, the energy balance equation becomes:

$$Q_h \equiv (H_2 - H_3)(m_s - m_r) = (H_1 - H_4)m_s - W_p, \quad (18)$$

where $H$ is an enthalpy, and the subscript numbers (1, 2, 3, and 4) correspond to the locations shown in Figure 1. From eq 18, the generator-inlet enthalpy, $H_1$, can be obtained:

$$H_1 = H_4 + (H_2 - H_3)(1 - 1/f) + W_p / m_r. \quad (19)$$

From the energy balance around the generator, the generator heat input, $Q_g$, is given by,

$$Q_g = H_5 m_r + H_2(m_s - m_r) - H_1 m_s. \quad (20)$$

By eliminating $H_1$ from this equation with eq 19, eq 20 can be written as:

$$Q_g / m_r = H_5 - H_4 f + H_3(f - 1) - W_p / m_r. \quad (21)$$

Similarly, the heat rejection in the absorber, $Q_a$, is given by,

$$Q_a / m_r = H_3(f - 1) + H_7 - H_4 f. \quad (22)$$

Condenser and evaporator heats per unit mass flow, respectively, are:

$$Q_c / m_r = H_5 - H_6 \quad (23)$$

$$Q_e / m_r = H_7 - H_6. \quad (24)$$

Then, the system performance is defined by a *heat ratio,* $\eta$, (output power divided by input power):

$$\eta = \frac{Q_e}{Q_g \pm W_p}.$$

However, the solution pumping power, $W_p$, is usually much smaller than $Q_g$, and it is customary to use a COP (coefficient of performance) defined as:

$$COP = \frac{Q_e}{Q_g}. \tag{25}$$

This can be expressed in terms of *H* and *f:*

$$COP = \frac{H_7 - H_6}{H_5 + H_3(f-1) - H_4 f}. \tag{26}$$

Enthalpies at all locations and solubility in the absorber and generator units are calculated in a thermodynamically consistent way by use of the EOS model discussed above.

The pure component EOS constants for refrigerants have been taken from Yokozeki A (2001, *supra),* Yokozeki A (Proc. Int. Congress of Refrigeration, Washington, D.C. 2003), and EcoLibrium™ (2004, 3, 20-24). As for selected absorbents in this study, the critical parameters have been estimated from group contribution methods (Reid RC *et al, supra).* The accuracy in critical parameters for these high boiling-point materials is less important for correlating solubility data (Yokozeki A, 2001, *supra).* However, as mentioned earlier, the $\beta_1$ parameter in eq 6 can be important, and will be treated as an adjustable parameter in the analysis of binary solubility data.

In order to calculate thermal properties with EOS, the ideal gas heat capacity for each pure compound is needed as a function of temperature: see eq 14. The coefficients for eq 14 have all been estimated from group contribution methods (Reid, RC, *et al, supra).*

Next, the solubility (vapor-liquid equilibrium) data of fluorocarbon/ionic liquid binary mixtures is analyzed in order to determine the EOS parameters for mixtures. The four binary interaction parameters, $l_{ij}$, $l_{ji}$, $m_{ij}$, and $\tau_{ij}$, and the absorbent $\beta_1$ parameter for each binary pair have been determined by non-linear least squares analyses with an object function of relative pressure differences.

Evaluation of the theoretical performance of an absorption heating or cooling cycle is based on a simple ideal cycle shown in Figure 1, and the present theoretical model. Here, the pumping power $W_p$ is neglected, since it is usually insignificant with respect to other thermal powers. In addition, several assumptions are made:

(1) There is no pressure drop in connecting lines.

(2) The refrigerant expansion process from the condenser to the evaporator is iso-enthalpic, as is usually done in vapor compression cycle calculations. The condition at Point 7 in Figure 1 (exit of evaporator) is a pure refrigerant dew point with $T = T_{eva}$.

(3) The condition at Point 6 is a refrigerant bubble point, and there is no subcooled liquid. The condition at Point 5 (inlet to condenser) is a superheated state of a pure refrigerant with $P = P_{con}$ and $T = T_g$.

(4) Pressures in the condenser and the generator *($P_{con}$ and Pg)* are the same, and evaporator and absorber pressures ($P_{eva}$ and $P_a$) are similarly equal.

(5) The condition at Point 3 (solution inlet to the absorber) is a solution's bubble point specified with the absorber pressure *($P_a$)* and a solution concentration of the generator ($x_g$).

(6) Temperatures in the generator ($T_g$), absorber ($T_a$), condenser ($T_{con}$), and evaporator ($T_{eva}$) are specified as a given cycle condition.

(7) The refrigerant gas flow rate ($m_r$) is set to be 1 kg· $s^{-1}$, without loss of generality, and the absorbent vapor is neglected.

The first step of cycle calculations is to obtain $P_{eva}$ and $P_{con}$ as saturated vapor pressures of a pure refrigerant at given temperatures: Bubble-Point P routine (Ness, HCV *et al, supra).* Then, using a usual TP (Temperature-Pressure) Flash routine (Ness, HCV *et al, supra),* absorbent compositions, $x_g$ and $x_a$, in the generator and absorber units are calculated. This provides *f* (flow rate ratio) in eq 17. The thermodynamic properties at Point 3 are determined from the assumption (5): Bubble-Point T routine (Ness, HCV *et al, supra).* The enthalpy at Point 1 is obtained from eq 19. Enthalpies at all other points are easily calculated with known T, P and compositions. Thus, the necessary quantities for the performance evaluation can be obtained using the listed equations. Cycle performances for the present binary systems are summarized in Example 1, Table 1 with selected thermodynamic quantities, where the specified temperatures for the cycle condition are: $T_g$ / $T_{con}$ / $T_a$ /$T_{eva}$ = 100 / 40 / 30 /10°C, and $m_r$ = 1 kg·$s^{-1}$.

The well-known refrigerant-absorbent pairs, $NH_3/H_2O$ and $H_2O$/LiBr, have also been calculated and are shown in Example 1, Table 1 for comparison. In the case of $NH_3/H_2O$, the absorbent $H_2O$ has a non-negligible vapor pressure at the generator exit, and in practical applications a rectifier (distillation) unit is required in order to separate the refrigerant

from absorbent water. The effect of vapor pressure and extra power requirement due to the rectifier have been ignored; thus, the calculated *COP* is over-estimated for the present performance comparison. For $H_2O$/LiBr, the EOS model was not developed. Instead, empirical correlation diagrams for the thermodynamic properties were employed (temperature-pressure-concentration diagram and enthalpy-temperature diagram in Stoecker and Jones, Refrigeration and Air Conditioning [McGraw-Hill, New York, 1982, 328-350]).

Cycle calculations for an absorption refrigeration cycle may be readily made using the EOS as described herein, but analysis of the results benefits from a different approach than used in the case of an ordinary vapor compression cycle. In the latter case, a high pressure/temperature refrigerant gas is produced by a vapor compressor, where the thermodynamic process is theoretically a single isentropic step: inlet and exit enthalpies of the compressor are sufficient for describing the compressor work. In the absorption cycle, however, the process of generating the corresponding high pressure/temperature gas is more complicated, and it is useful to know enthalpies at several different locations as well as refrigerant-absorbent solubility differences at the absorber and generator units (related to the *f* value), as seen in eqs. 17, 21 and 22.

The condenser and evaporator performance is the same for both cycles at given temperatures, and may be understood based on the latent heat of vaporization (or condensation). In general, the refrigerating effect is the latent heat at the evaporator, which increases with an increase in the temperature difference between $T_c$ and $T_{eva}$. Thus, at a given. $T_{eva}$, the latent heat is larger for a refrigerant with a higher $T_c$. In addition, the *molar latent heat* (J/mol) is generally not so much different among refrigerants at their boiling point (or far away from $T_c$), while the *specific latent heat* (J/kg) can be significantly different due to a large difference in molar masses. These factors can explain large differences in the calculated refrigerating power $Q_e$.

An absorbent as used in an absorption heating or cooling cycle is desirably a compound that has high solubility for a refrigerant (*e.g.* 1,3-propanediol) and also a very high boiling point relative to the refrigerant. Example 1, Table 1 exemplifies the system of 1,3-propanediol + [bmim][$BF_4$], which has *COP*/*f* values of 0.40/22.6.

The following examples are presented to illustrate the advantages of the present invention and to assist one of ordinary skill in making and using the same. They illustrate the particular situation where 1,3-propane diol has been selected as the polyol. These examples are not intended in any way, however, to limit the scope of the disclosure and the appended claims.

GENERAL MATERIALS AND METHODS

The following abbreviations are used: MPa is mega Pascal; kPA is kilo Pascal; K is Kelvin, °C is degrees Centigrade; mm is millimeter; cm is centimeter; kW is kilowatt; PDO is 1,3-propanediol; and mol is mole.

1-Butyl-3-methylimidazolium hexafluorophosphate ([bmim][$PF_6$], $C_8H_{15}N_2F_6P$, molecular weight 284.18 g $mol^{-1}$), 1-butyl-3-methylimidazolium tetrafluoroborate ([bmim][$BF_4$], $C_8H_{15}N_2F_4B$, molecular weight 226.13 g $mol^{-1}$), 1-ethyl-3-methylimidazolium tetrafluoroborate ([emim][$BF_4$], $C_6H_{11}N_2F_4B$, molecular weight 197.98 g $mol^{-1}$), were obtained from Fluka Chemika (may be obtained from Sigma-Aldrich, St. Louis, Missouri) with a purity of >97%. 1,3-propanediol ($C_3H_8O_2$, molecular weight 76.1 g $mol^{-1}$) and methyl alcohol were obtained from Sigma-Aldrich with a minimum purity of 99.6 %.

The syntheses of the following anions are described in U.S. 2007/0131535: (potassium 1,1,2,2-tetrafluoroethanesulfonate, potassium-1,1,2-trifluoro-2-(perfluoroethoxy)ethanesulfonate, potassium-1,1,2-trifluoro-2-(trifluoromethoxy)ethanesulfonate, and sodium 1,1,2,3,3,3-hexafluoropropanesulfonate) and ionic liquids (1-butyl-2,3-dimethylimidazolium 1,1,2,2-tetrafluoroethanesulfonate, 1-butyl-methylimidazolium 1,1,2,2-tetrafluoroethanesulfonate, 1-ethyl-3-methylimidazolium 1,1,2,2-tetrafluoroethane sulfonate, 1-ethyl-3-methylimidazolium 1,1,2,3,3,3-hexafluoropropanesulfonate, 1-hexyl-3-methylimidazolium 1,1,2,2-tetrafluoroethanesulfonate, 1-dodecyl-3-methylimidazolium 1,1,2,2-tetrafluoroethanesulfonate, -hexadecyl-3-methylimidazolium 1,1,2,2-tetrafluoroethanesulfonate, 1-octadecyl-3-methylimidazolium 1,1,2,2-tetrafluoroethaneulfonate, 1-propyl-3-(1,1,2,2-TFES) imidazolium 1,1,2,2-tetrafluoroethanesulfonate, 1-butyl-3-methylimidazolium 1,1,2,3,3,3-hexafluoropropanesulfonate, 1-butyl-3-methylimidazolium 1,1,2-trifluoro-2-(trifluoromethoxy)ethanesulfonate, 1-butyl-3-methylimidazolium 1,1,2-trifluoro-2-(perfluoroethoxy)ethanesulfonate, tetradecyl(tri-n-butyl)phosphonium 1,1,2,3,3,3-hexafluoropropanesulfonate, tetradecyl(tri-n-hexyl)phosphonium 1,1,2-trifluoro-2-(perfluoroethoxy)ethanesulfonate, tetradecyl(tri-n-hexyl)phosphonium 1,1,2-trifluoro-2-(trifluoromethoxy) ethanesulfonate, 1-ethyl-3-methylimidazolium 1,1,2,2-tetrafluoro-2-(pentafluoroethoxy)sulfonate, and tetrabutylphosphonium 1,1,2-trifluoro-2-(perfluoroethoxy)ethanesulfonate).

For a composition of a polyol, such as 1,3-propanediol, and an ionic liquid to be useful as a thermal energy transfer composition, the polyol should be soluble in the ionic liquid at least to some extent. The thermal energy transfer composition will also preferably remain single phase, and not separate into two liquid phases, at the temperature of use. In order to measure the vapor-liquid-liquid equilibria ("VLLE") for mixtures of 1,3-propanediol with various ionic liquids, low-pressure sample containers were fabricated from borosilicate glass tubing with an outside diameter of 12.69 mm, an inside diameter of 7.94 mm, and an overall length of 15.5 cm. The glass tubing was sealed with a torch on one end

and open on the other. A Swagelok® stainless steel (Swagelok Co., Solon, OH; SS316) cap and plug with Teflon® polymer ferrules was used to seal the open end of the glass tubing. When tightening the cap, the ferrules must seal against the glass tubing, but care must be taken so that over-tightening does not crack the glass.

The volume of each liquid layer was obtained by measuring the liquid height from the bottom of the glass tubing as illustrated in Figure 2 using an electronic caliper (Mitutoyo America Corp., Aurora, IL; model no. CD-6" CS, code no. 500-196) with an accuracy of $\pm 0.01$ mm. The volume (v) versus the height (*h*) was calibrated experimentally, and an excellent linear relation, $v = a + bh$, was obtained. The a and b parameters were obtained for each tube using methyl alcohol as a reference sample at 293.15 K.

When a binary system exhibits a liquid-liquid separation (or VLLE), it is a univariant state according to the Gibbs phase rule; the thermodynamic freedom is one. For example, if a system temperature *T* is fixed, then all other thermodynamic intensive variables (pressure, compositions and molar volumes in each phase) are uniquely determined, regardless of any given overall-feed compositions. The overall feed composition only changes the physical volume in each liquid phase and gas phase, but the composition and molar volume in each phase remain constant as long as the three phases exist at the fixed T.

This unique VLLE state of a binary system can be determined experimentally using a simple apparatus, shown schematically in Figure 2, by mass-and-volume measurements alone without using any analytical method for analysis of the composition. The principle of the present method is based on the thermodynamic constraint, the univariant state (Gibbs phase rule), and the mass balance, as described in Shiflett, M.B. and Yokozeki, A. (Vapor-liquid-liquid equilibria of pentafluoroethane and ionic liquid [bmim][PF6] mixtures studied with the volumetric method, J. Phys. Chem. B (2006) 110:14436-14443) and Shiflett, M.B. and Yokozeki, A. (Vapor-liquid-liquid equilibria of hydrofluorocarbons + 1-butyl-3-methylimidazolium hexafluorophosphate, J. Chem. & Eng. Data (2006) 51:1931-1939).

To establish the thermodynamic equilibrium, sufficient time and mixing were required. A custom-made mixing apparatus, which can hold 14 sample containers, was designed for rocking the tubes back and forth in a constant temperature bath (Tamson Instruments b.v., Zoetermeer, The Netherlands; model no. TV4000LT) with a viewing window as shown in Figure 3. The bath was filled with Dow Coming silicon oil (Dow Coming, Midland, MI; model no. 5010) with a recommended use range of $(233.15 < T < 403.15)$ K. The bath had excellent temperature control with a uniformity of $\pm 0.02$ K. Before height measurements were taken, the sample holder was positioned upright below the liquid level of the tank for 6 to 12 h. The mixing and measurement procedure was repeated each day and the heights plotted as a function of time until no further change in the heights was detected. Using this procedure required 5 days to reach equilibrium at each temperature.

Figure 4 is a *Tx* diagram for the liquid-liquid equilibrium line for three systems composed of 1,3-propanediol + [bmim][$PF_6$], 1,3-propanediol + [bmim][$BF_4$], and 1,3-propanediol + [emim][$BF_4$] each plotted on the same figure. The Tx data for the solubility results are summarized in Examples 2-4. In Figure 4, each trend line separates the region wherein the 1,3-propanediol and ionic liquid form one liquid phase from the region wherein the 1,3-propanediol and ionic liquid form two liquid phases. For a particular composition, at temperatures inside the two-phase region *(i.e.* below the trend line on the diagram), the lower phase of the two-phase mixture is the ionic liquid-rich phase and the upper phase of the two-phase mixture is the 1,3-propanediol-rich phase. The upper critical solution temperature (UCST) for each composition is at the apex of each trend line. Depending on the composition, the UCST varied from 25°C to almost 85°C.

If a polyol; such as 1,3,-propanediol (PDO), is mixed with an ionic liquid for use as a thermal energy transfer composition, avoiding the formation of two liquid phases is preferred. An ionic liquid may be chosen such that, at the temperature of use, the energy transfer composition formed from that ionic liquid and a polyol preferably remains in the 1-phase region above the equilibrium bounday, and more preferably is above the UCST.

For the systems tested, it was found, for example, that the following compositions: compositions less than 10 mol% PDO in [bmim][$PF_6$]; compositions greater than 99.5 mol% PDO in [bmim][$PF_6$]; compositions less than 35 mol% PDO in [bmim][$BF_4$]; compositions greater than 96 mol% PDO in [bmim][$BF_4$]; compositions less than 23 mol% PDO in [emim][$BF_4$]; and compositions greater than 98 mol% PDO in [emim][$BF_4$] all had the desirable property that they remained single phase at temperatures as low as 10°C; these

**Example 1**

**Absorption Cycle Theoretical Performance**

**Table 1.** Comparisons of Theoretical Cycle Performances.[(a)] PDO; 1,3-propanediol

| Binary Systems (1)/(2) | $P_{con}$, $P_g$ kPa | $P_{eva}$, $P_a$ kPa | $f$ | $x_g$ Mass % | $x_a$ mass % | $Q_e$ kW | $COP$ |
|---|---|---|---|---|---|---|---|
| PDO/[bmim][$BF_4$] | 0.0211 | 0.0013 | 22.6 | 98.5 | 94.1 | 1212 | 0.400 |
| $NH_3$/$H_2O$ | 1548 | 615 | 2.54 | 59.5 | 36.1 | 1112 | 0.646 |
| $H_2O$/LiBr | 7.38 | 1.23 | 4.08 | 66.3 | 50.0 | 2502 | 0.833 |
| [(a)]Cycle conditions: $T_g$ / $T_{con}$ / $T_a$ / $T_{eva}$ = 100 / 40 / 30 /10 °C, and $m_r$ = 1 kg·s$^{-1}$. | | | | | | | |

**EXAMPLE 2**

**Mixture of 1-butyl-3-methylimidazolium hexafluorophosphate and 1,3-propanediol**

Experimental solubility (*Tx*) data for 1,3-propanediol in 1-butyl-3-methylimidazolium hexafluorophosphate ([bmim][$PF_6$]) are summarized in Table 2.

**Table 2. 1,3-Propanediol (1) + [bmim][$PF_6$] (2) system**

| *T*/K | mol% PDO lower phase | mol% PDO upper phase |
|---|---|---|
| 286.6 ± 0.2 | 10.9 ± 1.7 | 99.4 ± 0.1 |
| 287.8 ± 0.2 | 11.4 ± 2.3 | 99.4 ± 0.1 |
| 288.2 ± 0.2 | 11.8 ± 1.6 | 99.4 ± 0.1 |
| 291.9 ± 0.2 | 13.3±1.9 | 99.1 ± 0.1 |
| 298.3 ± 0.2 | 15.0 ± 2.4 | 99.0 ± 0.1 |
| 303.3 ± 0.2 | 15.5 ± 1.5 | 98.8 ± 0.1 |
| 313.5 ± 0.2 | 19.0 ± 1.9 | 98.5 ± 0.1 |
| 323.4 ± 0.2 | 24.3±1.5 | 97.8 ± 0.1 |

**EXAMPLE 3**

**Mixture of 1-butyl-3-methylimidazolium tetrafluoroborate and 1,3-propanediol**

Experimental solubility (Tx) data for 1,3-propanediol in 1-butyl-3-methylimidazolium tetrafluoroborate ([bmim] [$BF_4$]) are summarized in Table 3.

**Table 3. 1,3-Propanediol (1) + [bmim][$BF_4$] (2) system**

| *T*/K | mol% PDO lower phase | mol% PDO upper phase |
|---|---|---|
| 286.7 ± 0.2 | 36.8 ± 0.2 | 95.8 ± 0.8 |
| 287.9 ± 0.2 | 38.4 ± 0.4 | 95.2 ± 0.2 |
| 289.1 ± 0.2 | 39.7 ± 0.4 | 94.9 ± 0.2 |
| 291.9 ± 0.2 | 47.0 ± 0.5 | 93.1 ± 0.1 |

**EXAMPLE 4**

**Mixture of 1-ethyl-3-methylimidazolium tetrafluoroborate and 1,3-propanediol**

Experimental solubility (Tx) data for 1,3-propanediol in 1-ethyl-3-methylimidazolium tetrafluoroborate ([emim] [$BF_4$]) are summarized in Table 4.

**Table 4. 1,3-Propanediol (1) + [emim][$BF_4$] (2) system**

| *T*/K | mol% PDO lower phase | mol% PDO upper phase |
|---|---|---|
| 286.6 ± 0.2 | 23.8 ± 0.5 | 97.0 ± 0.2 |
| 287.8 ± 0.2 | 24.5 ± 0.5 | 97.0 ± 0.2 |
| 288.2 ± 0.2 | 24.9 ± 0.4 | 96.8 ± 0.2 |
| 291.9 ± 0.2 | 30.9 ± 0.4 | 95.8 ± 0.2 |
| 298.3 ± 0.2 | 35.8 ± 0.4 | 94.5 ± 0.2 |
| 303.3 ± 0.2 | 43.5 ± 0.3 | 92.2 ± 0.1 |

In this specification, unless explicitly stated otherwise or indicated to the contrary by the context of usage, where an embodiment of the subject matter hereof is stated or described as comprising, including, containing, having, being composed of or being constituted by or of certain features or elements, one or more features or elements in addition to those explicitly stated or described may be present in the embodiment. An alternative embodiment of the subject matter hereof, however, may be stated or described as consisting essentially of certain features or elements, in which embodiment features or elements that would materially alter the principle of operation or the distinguishing characteristics of the embodiment are not present therein. A further alternative embodiment of the subject matter hereof may be stated or described as consisting of certain features or elements, in which embodiment, or in insubstantial variations thereof, only the features or elements specifically stated or described are present.

In this specification, unless explicitly stated otherwise or indicated to the contrary by the context of usage,

(a) use of the indefinite article "a" or "an" with respect to a statement or description of the presence of an element or feature of this invention, does not limit the presence of the element or feature to one in number; and

(b) the words "include", "includes" and "including" are to be read and interpreted as if they were followed by the phrase "without limitation" if in fact that is not the case.

**Claims**

1. An apparatus for thermal energy transfer comprising a thermal energy transfer composition that comprises in admixture a polyol and at least one ionic liquid.

2. An apparatus according to Claim 1 wherein the composition has a single liquid phase.

3. An apparatus according to Claim 1 wherein the polyol comprises 1,3-propane diol.

4. An apparatus according to Claim 1 that comprises a first chamber into and out of which flows a fluid, and a second chamber into and out of which flows the thermal energy transfer composition, wherein each chamber has one or more walls, the fluid and the thermal energy transfer composition are separated by a wall of one of the chambers or a wall that is common to both chambers, and the respective temperatures of the fluid and the thermal energy transfer composition are not equal.

5. An apparatus according to Claim 4 wherein one of the chambers is located within the other, or the chambers are adjacent to each other.

6. An apparatus according to Claim 4 wherein the direction of flow of the fluid is parallel to, opposite to or across the direction of flow of the composition.

7. An apparatus for temperature adjustment comprising (a) an absorber that forms a mixture of a refrigerant and an absorbent; (b) a generator that receives the mixture from the absorber and heats the mixture to separate refrigerant, in vapor form, from the absorbent, and increases the pressure of the refrigerant vapor; (c) a condenser that receives the vapor from the generator and condenses the vapor under pressure to a liquid; (d) a pressure reduction device through which the liquid refrigerant leaving the condenser passes to reduce the pressure of the liquid to form a mixture of liquid and vapor refrigerant; (e) an evaporator that receives the mixture of liquid and vapor refrigerant

that passes through the pressure reduction device to evaporate the remaining liquid to form refrigerant vapor; and (f) a conduit that passes the refrigerant vapor leaving the evaporator back to the absorber; wherein the absorbent comprises an ionic liquid, and the refrigerant comprises a polyol.

**8.** An apparatus according to Claim 7 wherein the polyol comprises 1,3-propane diol.

**9.** An apparatus according to Claim 7 wherein the condenser is located in proximity to an object, medium or space to be heated, or the evaporator is located in proximity to an object, medium or space to be cooled.

**10.** A method of transferring thermal energy comprising contacting a solid object, a fluid, or a chamber that contains the fluid with a thermal energy transfer composition, wherein the solid object or fluid has a first temperature, the thermal energy transfer composition has a second temperature, the first and second temperatures are not equal, and the thermal energy transfer composition comprises a polyol and an ionic liquid.

**11.** A method according to Claim 10 wherein the fluid comprises a gas, and the gas is bubbled through the composition.

**12.** A method according to Claim 10 wherein the first temperature is higher than the second, or the first temperature is lower than the second.

**13.** A method according to Claim 10 comprising providing a flow of the fluid and a flow of the composition, wherein the direction of flow of the fluid is parallel to, opposite to or across the direction of flow of the composition.

**14.** A method according to Claim 10 wherein the polyol comprises 1,3-propane diol, and the method further comprises a step of providing the 1,3-propane diol by fermentation.

**Patentansprüche**

**1.** Vorrichtung zur Wärmeenergieübertragung, die eine Wärmeenergieübertragungszusammensetzung aufweist, die eine Mischung eines Polyols und mindestens einer ionischen Flüssigkeit aufweist.

**2.** Vorrichtung nach Anspruch 1, bei der die Zusammensetzung eine einzelne Flüssigkeitsphase aufweist.

**3.** Vorrichtung nach Anspruch 1, bei der das Polyol 1,3-Propandiol aufweist.

**4.** Vorrichtung nach Anspruch 1, die eine erste Kammer, in die ein Fluid hinein- und herausströmt, und eine zweite Kammer aufweist, in die die Wärmeenergieübertragungszusammensetzung hinein- und herausströmt, wobei eine jede Kammer eine oder mehrere Wände aufweist, das Fluid und die Wärmeenergieübertragungszusammensetzung durch eine Wand einer der Kammern oder eine Wand getrennt werden, die für beide Kammern gemeinsam ist, und wobei die jeweiligen Temperaturen des Fluids und der Wärmeenergieübertragungszusammensetzung nicht gleich sind.

**5.** Vorrichtung nach Anspruch 4, bei der eine der Kammern innerhalb der anderen angeordnet ist oder die Kammern benachbart zueinander sind.

**6.** Vorrichtung nach Anspruch 4, bei der die Strömungsrichtung des Fluids parallel zur, entgegengesetzt der oder quer über die Strömungsrichtung der Zusammensetzung verläuft.

**7.** Vorrichtung zur Temperaturregulierung, die aufweist: (a) eine Absorptionsvorrichtung, die eine Mischung eines Kältemittels und eines Absorptionsmittels bildet; (b) einen Generator, der die Mischung von der Absorptionsvorrichtung empfängt und die Mischung erhitzt, um das Kältemittel, in Dampfform, vom Absorptionsmittel zu trennen, und den Druck des Kältemitteldampfes erhöht; (c) einen Kondensator, der den Dampf vom Generator empfängt und den Dampf unter Druck zu einer Flüssigkeit kondensiert; (d) eine Druckreduziervorrichtung, durch die das den Kondensator verlassende flüssige Kältemittel gelangt, um den Druck der Flüssigkeit zu reduzieren, um eine Mischung der Flüssigkeit und des Dampfkältemittels zu bilden; (e) einen Verdampfer, der die Mischung der Flüssigkeit und des Dampfkältemittels aufnimmt, die die Druckreduziervorrichtung passiert, um die verbleibende Flüssigkeit zu verdampfen, um Kältemitteldampf zu bilden; und (f) eine Leitung, die der den Verdampfer verlassende Kältemitteldampf zurück zur Absorptionsvorrichtung passiert; wobei das Absorptionsmittel eine ionische Flüssigkeit aufweist

und das Kältemittel ein Polyol aufweist.

8. Vorrichtung nach Anspruch 7, bei der das Polyol 1,3-Propandiol aufweist.

9. Vorrichtung nach Anspruch 7, bei der der Kondensator in unmittelbarer Nähe zu einem zu erwärmenden Objekt, Medium oder Raum angeordnet ist, oder der Verdampfer in unmittelbarer Nähe zu einem abzukühlenden Objekt, Medium oder Raum angeordnet ist.

10. Verfahren zur Übertragung von Wärmeenergie, das den Schritt des Kontaktierens eines festen Objektes, eines Fluids oder einer Kammer, die das Fluid mit einer Wärmeenergieübertragungszusammensetzung enthält, wobei das feste Objekt oder das Fluid eine erste Temperatur aufweist, die Wärmeenergieübertragungszusammensetzung eine zweite Temperatur aufweist, wobei die erste und die zweite Temperatur nicht gleich sind, und wobei die Wärmeenergieübertragungszusammensetzung ein Polyol und eine ionische Flüssigkeit aufweist.

11. Verfahren nach Anspruch 10, bei dem das Fluid ein Gas aufweist und das Gas durch die Zusammensetzung Blasen bildet.

12. Verfahren nach Anspruch 10, bei dem die erste Temperatur höher ist als die zweite oder die erste Temperatur niedriger ist als die zweite.

13. Verfahren nach Anspruch 10, das den Schritt des Bereitstellens eines Fluidstromes und eines Zusammensetzungsstromes aufweist, wobei die Strömungsrichtung des Fluids parallel zur, entgegengesetzt der oder quer über die Strömungsrichtung der Zusammensetzung verläuft.

14. Verfahren nach Anspruch 10, bei dem das Polyol 1,3-Propandiol aufweist und das Verfahren außerdem einen Schritt des Bereitstellens des 1,3-Propandiols durch Fermentation aufweist.

**Revendications**

1. Appareil de transfert d'énergie thermique, comprenant une composition de transfert d'énergie thermique comprenant un mélange d'un polyol et d'au moins un liquide ionique.

2. Appareil selon la revendication 1, dans lequel la composition a une seule phase liquide.

3. Appareil selon la revendication 1, dans lequel le polyol comprend du 1,3 propanediol.

4. Appareil selon la revendication 1, comprenant une première chambre, dans laquelle et hors de laquelle s'écoule un fluide, et une deuxième chambre, dans laquelle et hors de laquelle s'écoule la composition de transfert d'énergie thermique, chaque chambre comportant une ou plusieurs parois, le fluide et la composition de transfert d'énergie thermique étant séparés par une paroi de l'une des chambres ou une paroi commune aux deux chambres, les températures respectives du fluide et de la composition de transfert d'énergie thermique n'étant pas égales.

5. Appareil selon la revendication 4, dans lequel l'une des chambres est agencée dans l'autre, les deux chambres pouvant aussi être adjacentes l'une à l'autre.

6. Appareil selon la revendication 4, dans lequel la direction de l'écoulement du fluide est parallèle ou opposé à la direction de l'écoulement de la composition ou traverse celle-ci.

7. Appareil d'ajustement de la température comprenant (a) un absorbeur formant un mélange d'un réfrigérant et d'un produit absorbant ; (b) un générateur recevant le mélange à partir de l'absorbeur et chauffant le mélange pour séparer le réfrigérant, sous forme de vapeur, du produit absorbant, et accroissant la pression du réfrigérant sous forme de vapeur ; (c) un condenseur recevant la vapeur à partir du générateur et assurant la condensation de la vapeur sous pression en un liquide ; (d) un dispositif de réduction de la pression, que traverse le réfrigérant liquide sortant du condenseur, pour réduire la pression du liquide et former un mélange de liquide et de réfrigérant sous forme de vapeur ; (e) un évaporateur, recevant le mélange de liquide et de réfrigérant sous forme de vapeur traversant le dispositif de réduction de la pression, pour évaporer le liquide restant du réfrigérant sous forme de vapeur : et (f) une conduite transférant de nouveau le réfrigérant sous forme de vapeur sortant de l'évaporateur vers l'absorbeur ;

le produit absorbant comprenant un liquide ionique et le réfrigérant comprenant un polyol.

**8.** Appareil selon la revendication 7, dans lequel le polyol comprend du 1,3 propanediol.

**9.** Appareil selon la revendication 7, dans lequel le condenseur est agencé à proximité d'un objet, d'un milieu ou d'un espace devant être chauffé, l'évaporateur pouvant aussi être agencé à proximité d'un objet, d'un milieu ou d'un espace devant être refroidi.

**10.** Procédé de transfert d'énergie thermique, comprenant l'étape d'établissement d'un contact entre un objet solide, un fluide ou une chambre contenant le fluide avec une composition de transfert d'énergie thermique, l'objet solide ou le fluide ayant une première température, la composition de transfert d'énergie thermique ayant une deuxième température, les première et deuxième températures n'étant pas égales, la composition de transfert d'énergie thermique comprenant un polyol et un liquide ionique.

**11.** Procédé selon la revendication 10, dans lequel le fluide comprend un gaz, le gaz étant barboté à travers la composition.

**12.** Procédé selon la revendication 10, dans lequel la première température est supérieure à la deuxième température, ou la première température est inférieure à la deuxième température.

**13.** Procédé selon la revendication 10, comprenant l'étape d'entraînement d'un écoulement de fluide et d'un écoulement de la composition, la direction de l'écoulement du fluide étant parallèle ou opposée à la direction d'écoulement de la composition ou traversant celui-ci.

**14.** Procédé selon la revendication 10, dans lequel le polyol comprend du 1,3 propanediol, le procédé comprenant en outre l'étape de fourniture du 1,3 propanediol par fermentation.

Figure 1

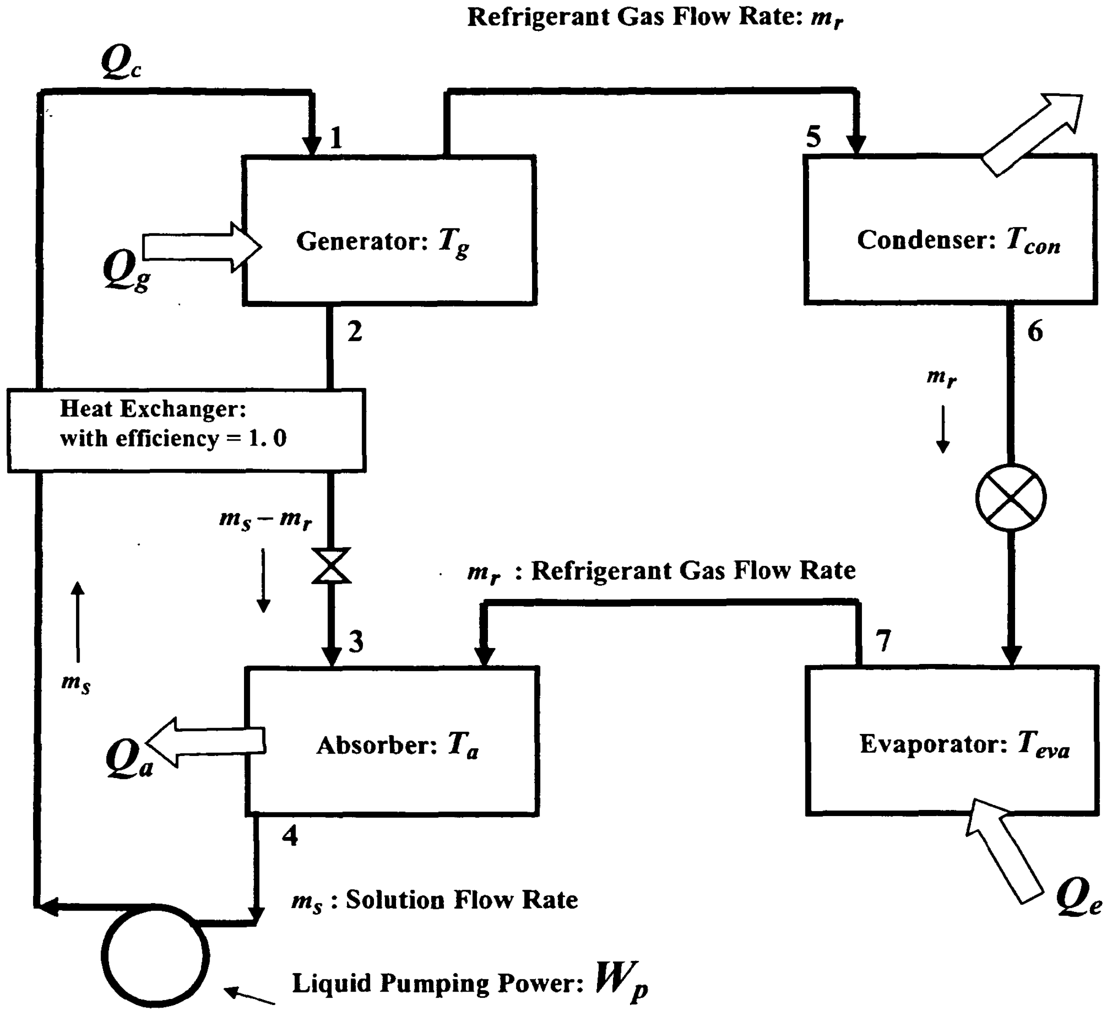
Refrigerant Gas Flow Rate: $m_r$
$Q_c$
1
5
Generator: $T_g$
$Q_g$
Condenser: $T_{con}$
2
6
Heat Exchanger:
with efficiency = 1. 0
$m_r$
$m_s - m_r$
$m_r$ : Refrigerant Gas Flow Rate
3
7
$m_s$
Absorber: $T_a$
Evaporator: $T_{eva}$
$Q_a$
4
$m_s$ : Solution Flow Rate
$Q_e$
Liquid Pumping Power: $W_p$

**Figure 2**

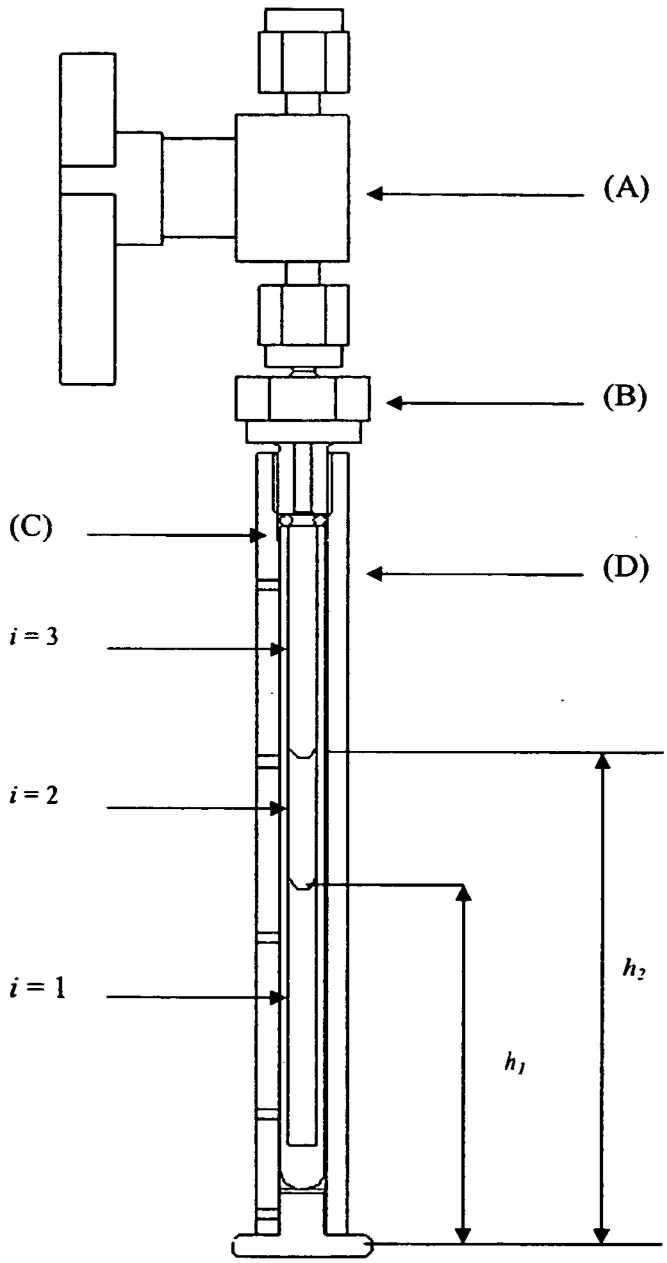

Figure 3

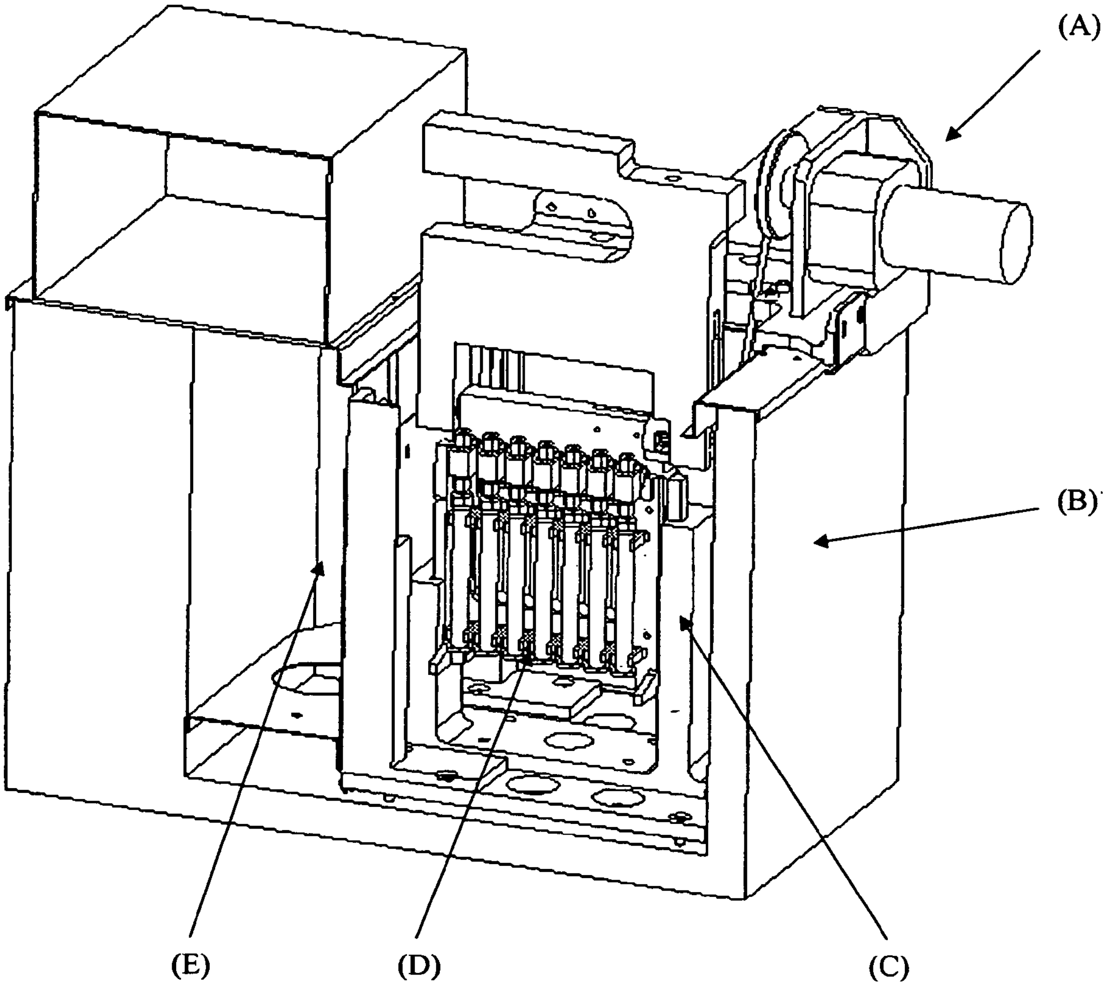

Figure 4

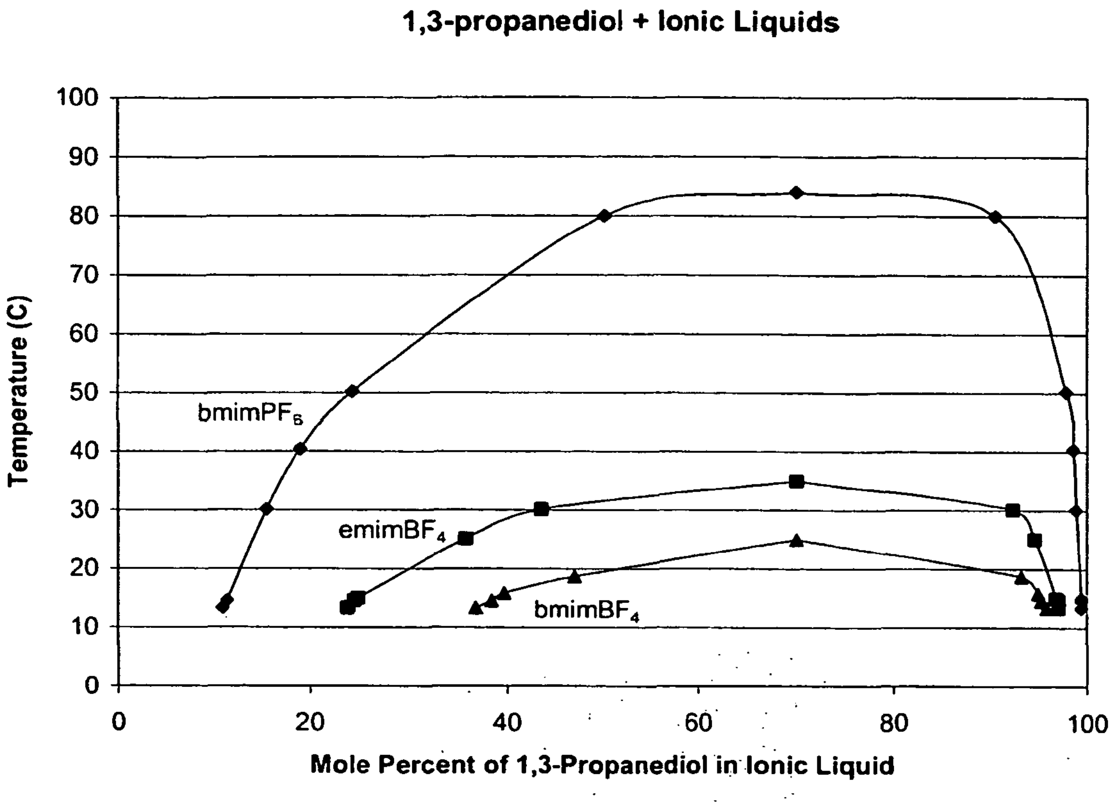
1,3-propanediol + Ionic Liquids
Temperature (C)
100
90
80
70
60
50
40
30
20
10
0
bmimPF6
emimBF4
bmimBF4
0
20
40
60
80
100
Mole Percent of 1,3-Propanediol in Ionic Liquid

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005113702 A
- WO 2006124776 A
- US 2006197053 A
- US 2007019708 A
- US 20040133058 A
- US 5686276 A
- US 7135309 A
- US 20060286653 A
- US 20070131535 A


### Non-patent literature cited in the description


- **VAN VALKENBURG et al.** Thermochemistry of Ionic Liquid Heat-Transfer Fluids. *Thermochimica Acta,* 2005, 181-188
- Heat Transfer. **KIRK-OTHMER.** Encyclopedia of Chemical Technology. John Wiley & Sons, Inc, 2005, vol. 13, 242-281
- Heat Exchange. **SHAH, R.K. ; MUELLER, A.C.** Ullmann's Encyclopedia of Industrial Chemistry. Wiley-VCH Verlag GmbH & CoA, 167-280
- **DORGAN et al.** American Society of Heating. Refrigeration and Air Conditioning Engineers, Inc, 1995
- Refrigeration Technology. **HAAF et al.** Ullmann's Encyclopedia of Industrial Chemistry. Wiley-VCH Verlag GmbH, vol. 31, 269-312
- *J. Chem. Tech. Biotechnol.,* 1997, vol. 68, 351-356
- *Chem. Ind.,* 1996, vol. 68, 249-263
- *J. Phys. Condensed Matter,* 1993, vol. 5 (34B), B99-B106
- *Chemical and Engineering News,* 30 March 1998, 32-37
- *J. Mater. Chem.,* 1998, vol. 8, 2627-2636
- *Chem. Rev.,* 1999, vol. 99, 2071-2084
- **NEZU et al.** Thermodynamic Properties of Working-Fluid Pairs with R-134a for Absorption Refrigeration System. *Natural Working Fluids 2002, IIR Gustav Lorentzen Conf. 5th. China,* 17 September 2002, 446-453
- **FATOUH, M. ; MURTHY, S. S.** *Renewable Energy,* 1993, vol. 3, 31-37
- **BHATT, M. S. et al.** *Heat Recovery System & CHP,* 1992, vol. 12, 225-233
- **NESS, H. C. V. ; ABBOTT, M. M.** Classical Thermodynamics of Nonelectrolyte Solutions with Applications to Phase Equilibria. McGraw-Hill, 1982
- **YOKOZEKI, A.** *Proc. Intl. Compressor Eng. Conf. at Purdue,* 1994, vol. 1, 335-340
- **YOKOZEKI, A.** *Intl. J. Thermophys.,* 2001, vol. 22, 1057-1071
- **YOKOZEKI, A.** *Applied Energy,* 2005, vol. 80, 383-399
- **TILLNER-ROTH R ; FRIEND DG.** *J. Phys. Chem. Ref. Data,* 1998, vol. 27, 63-96
- **SHIFLETT, M. B. ; YOKOZEKI, A.** *Ind. Eng. Chem. Res.,* 2005, vol. 44, 4453-4464
- **REID RC et al.** The Properties of Gases & Liquids. McGraw-Hill, 1987
- **YOKOZEKI.** *Int. J. Thermophys.,* 2001, vol. 22, 1057-1071
- **YOKOZEKI A.** *Applied Energy,* 2005, vol. 80, 383-399
- **YOKOZEKI A.** *Proc. Int. Congress of Refrigeration Washington, D.C.,* 2003
- **YOKOZEKI A.** *Proc. Int. Congress of Refrigeration, Washington, D.C.,* 2003
- **STOECKER ; JONES.** Refrigeration and Air Conditioning. McGraw-Hill, 1982, 328-350
- **SHIFLETT, M.B. ; YOKOZEKI, A.** Vapor-liquid-liquid equilibria of pentafluoroethane and ionic liquid [bmim][PF6] mixtures studied with the volumetric method. *J. Phys. Chem. B,* 2006, vol. 110, 14436-14443
- **SHIFLETT, M.B. ; YOKOZEKI, A.** Vapor-liquid-liquid equilibria of hydrofluorocarbons + 1-butyl-3-methylimidazolium hexafluorophosphate. *J. Chem. & Eng. Data,* 2006, vol. 51, 1931-1939